# EUROPÄISCHE PATENTSCHRIFT

(11) **EP 3 991 554 B1**
(45) Veröffentlichungstag und Bekanntmachung des Hinweises auf die Patenterteilung: **03.12.2025**
(21) Anmeldenummer: 21203725.3
(22) Anmeldetag: 20.10.2021
(51) Int. Cl.: A01M 7/00

(54) **LANDWIRTSCHAFTLICHE FELDSPRITZE UND SPRITZVORRICHTUNG FÜR EINE LANDWIRTSCHAFTLICHE FELDSPRITZE**
AGRICULTURAL SPRAYER AND SPRAYING DEVICE FOR AGRICULTURAL SPRAYER
PULVÉRISATEUR AGRICOLE ET DISPOSITIF DE PULVÉRISATION POUR UN PULVÉRISATEUR AGRICOLE

(30) Priorität: 02.11.2020 DE 102020128774
(43) Veröffentlichungstag der Anmeldung: 04.05.2022
(73) Patentinhaber: HORSCH LEEB Application Systems GmbH, 94405 Landau an der Isar (DE)
(72) Erfinder: Leeb, Theodor, 94405 Landau an der Isar (DE); Leeb, Jonas, 94405 Landau an der Isar (DE)
(74) Vertreter: v. Bezold & Partner Patentanwälte - PartG mbB

(56) Entgegenhaltungen:
- DE-A1- 102017 220 030
- DE-C2- 3 401 734
- US-A- 4 274 585

## Beschreibung

Die Erfindung betrifft eine Spritzvorrichtung für eine landwirtschaftliche Feldspritze zum dosierten Ausbringen von Spritzflüssigkeit, vorzugsweise auf landwirtschaftlichen Nutzflächen. Die Spritzvorrichtung umfasst ein Spritzgestänge mit zwei seitlichen Auslegern und mindestens eine Mischkammer zum Vermischen von Spritzflüssigkeit. Die Erfindung betrifft ferner eine landwirtschaftliche Feldspritze mit einer solchen Spritzvorrichtung.

Dokument US 4 274 585 A offenbart eine Vorrichtung, umfassend einen Hauptbehälter für Wasser und mindestens einen Nebenbehälter für einen Zusatzstoff. Beide Behälter sind mit einer Mischkammer verbunden, die über getrennte Leitungen mit unabhängigen Segmenten eines Sprühverteilers verbunden ist. Eine Pumpe pumpt den Zusatzstoff in die Mischkammer. Ein von der Fahrzeuggeschwindigkeit abhängiger Antriebsmechanismus treibt die Pumpe in Abhängigkeit von der Fahrzeuggeschwindigkeit an und bewirkt damit eine erste Regulierung des Zusatzstoffstroms zur Mischkammer. Zwischen dem Nebenbehälter und der Mischkammer ist ein Ventil angeordnet, das eine zweite Regulierung des Flusses des Zusatzstoffs zur Mischkammer in Abhängigkeit von der Anzahl der Segmente des Sprühverteilers bewirkt.

Dokument DE 10 2017 220 030 A1 offenbart eine Spritzeinrichtung zum Ausbringen von Flüssigkeiten, insbesondere für landwirtschaftliche Zwecke, mit zumindest einer Spritzdüse zum Ausspritzen der Flüssigkeit und mit zumindest einer Mischeinrichtung, die zumindest eine Mischkammer aufweist. Die Mischkammer weist zumindest einen ersten Zulauf für eine Trägerflüssigkeit, zumindest einen zweiten Zulauf für eine Wirkstoffflüssigkeit und zumindest einen Ablauf auf. Die Mischeinrichtung weist zumindest ein Stellelement zum Einstellen eines Mischverhältnisses von Trägerflüssigkeit und Wirkstoffflüssigkeit auf.

Dokument DE 34 01 734 C2 offenbart eine fahrbare Vorrichtung zum Ausbringen unterschiedlicher Mengen von flüssigen Behandlungsmitteln in Land-, Forst- oder Weinbauwirtschaft, mit einem Behandlungsmitteltank, einer Druckleitung, die vom Tank über eine Pumpe und eine der Einstellung der Behandlungsmittelmenge dienende Druckeinstellvorrichtung zurück in den Tank führt, sowie mindestens einer Düsenleitung, welche hintereinander mehrere Spritz- bzw. Sprühdüsen trägt.

Landwirtschaftliche Feldspritzen werden zum Ausbringen bzw. zur Applikation von flüssigen Wirkstoffen, z. B. Pflanzenschutz- und/oder Düngemittel, verwendet. Derartige Feldspritzen mit einem quer zur Fahrtrichtung orientierten und über einen Pflanzenbestand bewegten Spritzgestänge sind in unterschiedlichen Ausführungsvarianten bekannt.

Mit derartigen Feldspritzen soll das Ziel verfolgt werden, ein definiertes Flüssigkeitsvolumen an Spritzflüssigkeit, z. B. Pflanzenschutz- und/oder Düngemittel, gleichmäßig und mit definierbarer Intensität auf einem Pflanzenbestand auszubringen. Um die Spritzflüssigkeit großflächig auf den zu bearbeitenden Nutzflächen auszubringen, weisen Spritzgestänge derartiger Feldspritzen seitliche faltbare Ausleger mit großer Arbeitsbreite auf, teilweise von mehr als zwanzig Metern. Für Transportfahrten werden solch breite Spritzgestänge gefaltet und eingeklappt. Im ausgeklappten Zustand sind die Ausleger quer zur Fahrtrichtung angeordnet. Am Spritzgestänge sind zum dosierten Ausbringen der Spritzflüssigkeit in Abständen zueinander angeordnete Ausbringelemente, z. B. Spritzdüsen, vorhanden. Die Ausbringelemente erzeugen einen zum Boden bzw. zum Pflanzenbestand hin ausgerichteten Sprühkegel zum gewünschten Verteilen der Spritzflüssigkeit.

Bei der heute praxisüblichen Verwendung von in einem großen Vorratsbehälter fertig angemischter Spritzflüssigkeit ist bei heterogenem Schaderregervorkommen oder Wachstumsstadien der Verbrauch an Pflanzenschutzmittel hoch, wenn in der Teilfläche die Schadschwelle unterschritten wird oder das Wachstumsstadium ausreichend ist und somit keine Applikation indiziert ist.

Um Überfahrten einzusparen und um die Wirkstoffzusammensetzung entsprechend den vorliegenden Erfordernissen auf der Ackerfläche schnell verändern zu können, sind aus dem Stand der Technik sog. "Direkteinspeisesysteme" bekannt, bei denen ein in einer Flüssigkeit gelöster Wirkstoffe, z. B. ein auszubringendes Pflanzenschutzmittel, bei Bedarf zu einer Trägerflüssigkeit oder einer bereits fertig angemischten Spritzflüssigkeit per Direkteinspeisung zudosiert werden kann.

Die hier aus der Praxis bekannten Feldspritzen haben jedoch den Nachteil, dass es bei einer zentralen Zudosierung per Direkteinspeisung zu zeitlich starken Verzögerungen kommt, wenn der Einspeiseort zu weit von den Spritzdüsen entfernt ist und sich die Fluidstrecken vom Einspeiseort zu den einzelnen Spritzdüsen zudem deutlich unterscheiden. Dadurch tritt der sog. Schmetterlingseffekt auf, da das per Direkteinspeisung erzeugte Spritzflüssigkeitsgemisch nicht sofort an allen Spritzdüsen anliegt, sondern sich erst verzögert über die gesamte Arbeitsbreite aufbaut und es dadurch zu einer zumindest zeitweisen ungleichmäßigen Verteilung des Wirkstoffes kommt.

Um eine teilflächenspezifische Applikation zu ermöglichen, sind aus der Praxis ferner Feldspritzen bekannt, die mehrere voneinander unabhängige Flüssigkeitskreisläufe für verschiedene Wirkstoffmittel aufweisen. In Abhängigkeit der gewünschten teilflächenspezifischen Behandlung können die Flüssigkeitskreisläufe bzw. die diesen zugeordneten Ausbringelemente entsprechend zu- bzw. weggeschaltet werden. Nachteilig an derartigen Ansätzen ist, dass in Abhängigkeit der Anzahl an verschiedenen Wirkstoffmittel jeweils voneinander getrennte Flüssigkeitskreisläufe an der Feldspritze aufgebaut werden müssen, welche wiederum kostenintensiv sind und viel Bauraum benötigen. Ebenso ist es möglich, dass sich die Spritzkegel der wenigstens zwei nebeneinander angeordneten Ausbringdüsen gegenseitig beeinflussen, wodurch die Verteilqualität wiederum verschlechtert wird.

Alternative Ansätze, bei denen die Direkteinspeisung bzw. Zudosierung eines Pflanzenschutzmittels erst unmittelbar in oder an jeder Spritzdüse erfolgt, vermeiden zwar zusätzliche Spritzdüsen, haben jedoch den Nachteil, dass an jeder Spritzdüse zusätzliche Ventiltechnik und eine Mischkammer vonnöten ist, was kostenaufwändig ist. Ferner erschwert der beschränkte Bauraum im Bereich der Spritzdüse eine homogene Vermischung.

Es ist somit eine Aufgabe der Erfindung, eine verbesserte Technik zum Ausbringen von Spritzflüssigkeit mittels eines Spritzgestänges bereitzustellen, mittels der Nachteile herkömmlicher Techniken vermieden werden können. Die Aufgabe der Erfindung ist es insbesondere, eine Technik zum Ausbringen von Spritzflüssigkeit mittels eines Spritzgestänges bereitzustellen, mittels welcher eine verbesserte Zudosierung einer Spritzflüssigkeit per Direkteinspeisung ermöglicht wird.

Die Aufgabe wird gelöst durch die Merkmale des unabhängigen Anspruchs. Vorteilhafte Weiterbildungen sind in den abhängigen Ansprüchen und der Beschreibung angegeben.

Gemäß einem allgemeinen Gesichtspunkt der Erfindung wird eine Spritzvorrichtung für eine landwirtschaftliche Feldspritze zum dosierten Ausbringen von Spritzflüssigkeit, vorzugsweise auf landwirtschaftlichen Nutzflächen, bereitgestellt. Die Spritzvorrichtung umfasst ein schwenkbares Spritzgestänge, umfassend zwei seitliche Ausleger, die jeweils eine Mehrzahl von Ausbringelementen zum Versprühen und/oder Feinverteilen der Spritzflüssigkeit aufweisen.

Die Spritzvorrichtung umfasst ferner mindestens eine Mischkammer zum Vermischen mehrerer Spritzflüssigkeiten. Die Mischkammer umfasst einen ersten Einlass zum Einlassen eines ersten Flüssigkeitsstroms und einen zweiten Einlass zum Einlassen eines zweiten Flüssigkeitsstroms. Die Mischkammer kann einen oder mehrere weitere Einlässe zum Einlassen weiterer Flüssigkeitsströme aufweisen. Die Mischkammer ist ausgebildet, wenigstens zwei Flüssigkeiten, vorzugsweise in unterschiedlichen Mengen zu vermischen, vorzugsweise homogen zu vermischen. Die Mischkammer zeichnet sich dadurch aus, dass diese mehrere Auslässe aufweist, um nach der Vermischung den resultierenden vermischten Flüssigkeitsstrom in Form mehrerer paralleler Teilströme auszuleiten. Ein vermischter Teilström ist ein Teilstrom, der durch einen der Auslässe der Mischkammer ausgegeben wird.

Die Mischkammer ist somit ausgebildet, die zugeführten Flüssigkeitsströme nicht nur zu vermischen, sondern die resultierende vermischte Spritzflüssigkeit in mehrere Teilströme aufzuteilen, die jeweils über einen der Verteilerauslässe aus der Mischkammer austreten. Die Mischkammer dient somit gleichzeitig als Fluidverteiler zum Aufteilen eines vermischten Flüssigkeitsstroms in mehrere Teilströme, um die in der der Mischkammer entstehende Mischung mindestens zweier Spritzflüssigkeiten zu verzweigen und/oder in Teilströme aufzuteilen und mittels der mehreren Auslässe auf getrennten Teilströmungswegen aus der Mischkammer auszuleiten. Die Auslässe der Mischkammer werden daher nachfolgend auch als Verteilerauslässe bezeichnet.

Die Mischkammer mit mehreren Auslässen bietet den besonderen Vorzug, dass zur Weiterleitung der vermischten Spritzflüssigkeit an die Mischkammer mehrere Leitungen, nachfolgend als Ausbringleitungen oder auch Düsenleitungen bezeichnet, angeschlossen werden können, über welche die in der Mischkammer erzeugte vermischte Spritzflüssigkeit mittels mehrerer paralleler Teilströme und/oder getrennter Fluidstrecken den Ausbringelementen zugeführt werden kann. Dadurch können Unterschiede in den zeitlichen Verzögerungen, bis eine in der Mischkammer erzeugte Mischung die einzelnen Ausbringelemente erreicht, verhindert oder zumindest reduziert werden.

Der erste Einlass kann ein erster Zufluss-Anschluss für eine erste Flüssigkeitszuleitung sein. Der zweite Einlass kann ein zweiter Zufluss-Anschluss für eine zweite Flüssigkeitszuleitung sein. Die mehreren Auslässe können jeweils als Auslass-Anschlüsse für die vermischten Flüssigkeitsströme ausgebildet sein. Die Einlässe können als Einlassstutzen ausgeführt sein. Die Auslässe können als Auslassstutzen ausgeführt sein. Der erste Einlass und der eine zweite Einlass können so ausgeführt und/oder angeordnet sind, dass sich der Strömungspfad des ersten Flüssigkeitsstroms und der Strömungspfad des zweiten Flüssigkeitsstroms in der Mischkammer kreuzen, vorzugsweise im Wesentlichen senkrecht kreuzen. Dadurch wird eine besonders gute Durchmischung ermöglicht.

Erfindungsgemäß ist der erste Einlass an einer ersten Seite der Mischkammer angeordnet und der zweite Einlass ist an einer der ersten Seite gegenüberliegenden zweiten Seite der Mischkammer angeordnet. Hierbei kann der erste Einlass optional mittig oder in einem mittleren Bereich der ersten Seite angeordnet sein. Ferner kann der zweite Einlass mittig oder ein einem mittleren Bereich der zweiten Seite angeordnet sein. Hierdurch können Turbulenzen und Dralleffekte, wenn sich die Flüssigkeitsströme aus dem ersten Einlass und aus dem zweiten Einlass in der Mischkammer kreuzen, erhöht und damit die Vermischung verbessert werden.

Erfindungsgemäß weist die zweite Seite eine sich in einen Innenraum der Mischkammer erstreckende Erhebung auf, die mehrere Durchgangsöffnungen aufweist, wobei der zweite Flüssigkeitsstrom über die mehreren Durchgangsöffnungen in den Innenraum der Mischkammer eintritt. Die Erhebung erstreckt sich in Richtung zur ersten Seite. Die Durchgangsöffnungen dienen somit als Eintrittsöffnungen. Dadurch wird der zweite Flüssigkeitsstrom bereits beim Eintritt in die Mischkammer in mehrere Teilströme aufgeteilt, wodurch die Durchmischung mit dem ersten Teilstrom verbessert wird.

In einer bevorzugten Variante dieser Ausführungsform können die Durchgangsöffnungen so an der Erhebung angeordnet sein, dass der zweite Flüssigkeitsstrom in Form mehrerer Teilströme fächerartig, kreisscheibenartig, trichterartig oder ähnlich den Stufen einer Wendeltreppe verteilt in den Innenraum der Mischkammer einströmt. Es ist möglich, dass die Durchtrittsöffnungen in Umfangsrichtung verteilt an einer seitlichen Mantelfläche der Erhebung angeordnet sind, derart, dass eine Eintrittsströmungsrichtung des aus den Durchgangsöffnungen in den Innenraum der Mischkammer eintretenden zweiten Flüssigkeitsstroms senkrecht zu einer Eintrittsströmungsrichtung am ersten Einlass ist. Die vorgenannten Varianten wirken sich ebenfalls vorteilhaft auf die Vermischung des ersten mit dem zweiten Flüssigkeitsstrom aus.

In einer weiteren bevorzugten Ausführungsform ist die Erhebung als eine domartig gewölbte oder haubenartige Erhebung ausgebildet. Dadurch kann die Erhebung gleichzeitig als Ablenkelement und/oder Turbulator für den ersten Flüssigkeitsstrom innerhalb der Mischkammer dienen.

In einer weiteren bevorzugten Ausführungsform ist die Erhebung an einem mittleren Bereich der zweiten Seite angeordnet und die mehreren Auslässe sind an einem den mittleren Bereich umgebenden äußeren Bereich der zweiten Seite angeordnet. Ferner können die mehreren Auslässe an der zweiten Seite kreisförmig und/oder konzentrisch zur Erhebung angeordnet sein. Dies ist vorteilhaft für den Anschluss der Ausbringleitungen.

Bei den vorgenannten, die Erhebung aufweisenden Ausführungsformen ist es auch möglich, dass der erste Einlass an der gleichen Seite wie der zweiten Einlass angeordnet ist oder an einer zur zweiten Seite senkrechten Wandung der Mischkammer angeordnet ist.

In einer weiteren bevorzugten Ausführungsform ist der erste Einlass in Bezug auf den zweiten Einlass an der gegenüberliegenden Seite der Mischkammer angeordnet, nämlich mittig über der Erhebung angeordnet, derart, dass ein über den ersten Einlass eintretender Flüssigkeitsstrom zumindest teilweise auf einen geschlossenen gewölbten Mittelbereich der Erhebung trifft und von dort abgelenkt wird, vorzugsweise kreisscheibenartig, trichterartig und/oder in Umfangsrichtung gleichmäßig verteilt abgelenkt wird. Dadurch dient die Erhebung gleichzeitig als Drall- oder Leitelement, um den ersten Flüssigkeitsstrom in Richtung des einströmenden zweiten Flüssigkeitsstroms zu lenken.

In einer weiteren bevorzugten Ausführungsform ist die Mischkammer zylinderförmig ausgeführt. Die Zylinderform ist vorteilhaft zur Ausbildung eines abgegrenzten Raums oder Bereichs, in dem die zu durchmischenden Flüssigkeitsströme aufeinandertreffen und miteinander vermischt werden. Hierbei kann die Mischkammer eine kreisförmige oder kreisringförmige plane Grundplatte und eine zylinderförmige Abdeckhaube aufweisen. Die Grundplatte kann die Auslässe und den zweiten Einlass aufweisen, während die zylinderförmige Abdeckhaube den ersten Einlass aufweist. Alternativ ist es auch möglich, dass die Grundplatte den ersten Einlass aufweist und die Abdeckhaube die Auslässe und den zweiten Einlass.

Zur Verbesserung der Durchmischung kann die Mischkammer einen Turbulator und/oder eine Rührwelle zur Erzeugung von Turbulenzen umfassen. Vorstehend wurde bereits festgestellt, dass die optionale Erhebung selbst als Turbulator, d.h. als ein Turbulenzen erzeugendes Element, dienen kann. Alternativ oder zusätzlich zu der Erhebung können im Innenraum der Mischkammer ein oder mehrere weitere Turbulatoren oder eine Rührwelle vorgesehen sein.

In einer weiteren bevorzugten Ausführungsform ist die Mischkammer eine Mischkammer eines Direkteinspeisesystems der Spritzvorrichtung. Dies bedeutet, dass die Mischkammer dazu dient, zwei Flüssigkeitsströme miteinander zu vermischen, wobei in zumindest einem Flüssigkeitsstrom ein oder mehrere Wirkstoffe oder eine Wirkstoffkombination gelöst ist. Bei einem der Flüssigkeitsströme kann es sich um eine Trägerflüssigkeit, z. B. Klarwasser und/oder um eine Hauptmischung handeln. Unter Hauptmischung wird diejenige, üblicherweise bereits fertig angemischte, Spritzflüssigkeit verstanden, die zum Großteil von der Feldspritze verwendet wird und/oder die im größten Spritzflüssigkeitsvorratsbehälter der Feldspritze bevorratet ist. Bei dem anderen Flüssigkeitsstrom kann es sich um einen Flüssigkeitsstrom handeln, in dem ein anderer Wirkstoff, mehrere Wirkstoffe oder eine Wirkstoffkombination gelöst ist/sind, in konzentrierter oder bereits vorverdünnter Form.

In einer weiteren bevorzugten Ausführungsform umfasst die Spritzvorrichtung mehrere der Mischkammern, wobei das Spritzgestänge, und vorzugsweise jeder der Ausleger, in mehrere Teilabschnitte unterteilt ist, wobei an jedem Teilabschnitt eine Mehrzahl der Ausbringelemente zum Versprühen und/oder Feinverteilen der Spritzflüssigkeit angeordnet ist und jedes Ausbringelement genau einem Teilabschnitt zugeordnet ist. Die Unterteilung in Teilabschnitte erfolgt in Längsrichtung des Spritzgestänges und kann optional einer Unterteilung des Spritzgestänges in Teilbreiten entsprechen, was nachfolgend noch näher beschrieben ist. Das Spritzgestänge, vorzugsweise auch die Ausleger, sind jeweils in Längsrichtung der Ausleger in diese mehrere Teilabschnitte unterteilt, wobei die Teilabschnitte und die zugeordneten Mischkammern in Längsrichtung nebeneinander angeordnet sind. Entsprechend ist eine Gruppe von Ausbringelementen, die einem Teilabschnitt zugeordnet sind, in Längsrichtung benachbart zu einer weiteren Gruppe von Ausbringelementen angeordnet, die einem benachbarten Teilabschnitt und einer anderen Mischkammer zugeordnet sind.

Es ist auch möglich, dass dem Mittelteil Spritzdüsen zum Versprühen und/oder Feinverteilen der Spritzflüssigkeit zugeordnet sind. Ebenso ist es möglich, dass dem Mittelteil ergänzend eine oder mehrere Mischkammer(n) zugeordnet ist/sind.

Ferner sind in dieser Ausführungsform die stromab zu der jeweiligen Mischkammer angeordneten Ausbringelemente jeweils über eine Flüssigkeitsleitung, hier als Ausbringleitung bezeichnet, mit einem der Auslässe der jeweiligen Mischkammer verbunden. Die Auslässe können beispielsweise als Anschlüsse für Fluidleitungen, insbesondere für die Ausbringleitungen, ausgeführt sein. Ein Ende jeder Ausbringleitung ist somit an einem der Auslässe der Mischkammer angeschlossen, während das andere Ende der Ausbringleitung an einem Ausbringelement oder, falls sich die Ausbringleitung verzweigt, an mehreren Ausbringelementen des Teilabschnitts, insbesondere nur an einer Teilmenge der Ausbringelemente des Teilabschnitts, angeschlossen ist. Entsprechend werden Ausbringelemente eines Teilabschnitts des Auslegers stromab der zugeordneten Mischkammer nicht durch ein gemeinsames Düsenrohr gespeist, sondern durch unterschiedliche Leitungen, hier als Ausbringleitung oder auch als Düsenleitung bezeichnet, gespeist. Auf ein herkömmliches Düsenrohr zur Speisung von mehreren Ausbringelementen, z. B. Spritzdüsen, wird somit verzichtet. Stattdessen werden die Ausbringelemente über die an die Mischkammer angeschlossenen Ausbringleitungen gespeist, um den Ausbringelementen über hydraulisch parallele Teilströme Spritzflüssigkeit zuzuführen.

Dies bietet in Kombination mit der Mischkammer den Vorteil, dass Unterschiede in den Zeitverzügen, bis die durch die Mischkammer vermischte Spritzflüssigkeit die einzelnen Ausbringelemente erreicht, entsprechend reduziert und je nach Ausführungsform sogar verhindert werden können. Dies ermöglicht ein gleichmäßigeres Ausbringen von Spritzflüssigkeit, insbesondere beim Anschalten, d. h. beim Start des Spritzvorgangs, oder beim Wechsel der Spritzflüssigkeit bzw. deren Mischung. Ferner kann der durchschnittliche Zeitverzug selbst reduziert werden, da die Ausbringleitungen im Vergleich zu einem herkömmlichen Düsenrohr mit kleinerem Durchmesser ausgeführt werden können und somit entsprechend höhere Drücke und höhere Fördergeschwindigkeiten ermöglicht werden.

Das Ausbringelement kann eine Spritzdüse oder ein Düsenträger (auch als Düsenstock bezeichnet) sein, in dem wiederum wenigstens eine Spritzdüse angebracht ist. Die Ausbringelemente können separat ansteuerbar sein, um diese für den Spritzbetreib einzeln ein- und ausschalten zu können. Das Ausbringelement kann hierzu ein Schaltventil oder steuerbare Blende zur Steuerung des Durchflusses umfassen. Die Ausbringelemente können optional mittels Pulsweitenmodulation ansteuerbar und/oder regelbar sein. Die Ausbringelemente sind beabstandet zueinander in Längsrichtung des Spritzgestänges angebracht, z. B. in Abständen von beispielsweise 25 cm oder 50 cm.

In einer weiteren Ausführungsvariante ist jedes der Ausbringelemente über eine separate Ausbringleitung mit einem der Auslässe fluidisch verbunden. Anders ausgedrückt verbindet jede Ausbringleitung in dieser Variante genau ein Ausbringelement mit einem Verteilerauslass. Gemäß dieser Ausführungsvariante weisen die Ausbringleitungen somit keine Verzweigung zwischen dem Verteilerauslass und dem Ausbringelement auf. Unterschiede in den Zeitverzügen, bis die Spritzflüssigkeit die einzelnen Ausbringelemente erreicht, können hier entsprechend besonders vorteilhaft reduziert und je nach Ausführungsform sogar verhindert werden.

In einer alternativen Ausführungsform weisen zumindest einige der Ausbringleitungen, vorzugsweise alle Ausbringleitungen, jeweils zumindest eine Verzweigungsstelle auf, die eine Mehrzahl von Leitungszweigen bereitstellt, wobei jeweils ein Leitungszweig die Verzweigungsstelle mit einem Ausbringelement verbindet. An der Verzweigungsstelle wird der vom Auslass der Mischkammer ankommende Teilvolumenstrom nochmals aufgeteilt. Im Vergleich zu separaten Ausbringleitungen für alle Ausbringelemente kann hier für die Ausbringleitungen benötigter Bauraum optimiert werden. Die Verzweigungsstelle kann nach Art einer Y-Verzweigung oder nach Art einer T-Verzweigung ausgebildet sein, beispielsweise durch ein T-Stück oder ein zweckmäßig ausgeführtes Verbindungsstück. In einer bevorzugten Ausführungsvariante ist genau eine solche Verzweigungsstelle je Ausbringleitung vorgesehen.

In einer weiteren Ausführungsform kann die Anzahl der Auslässe der Mischkammer im Bereich von 4 bis 16 oder im Bereich von 6 bis 12 liegen. Je nach Gesamtanzahl der Ausbringelemente werden somit mehrere in Längsrichtung des Auslegers verteilt angeordnete Mischkammern benötigt.

In einer weiteren Ausführungsvariante sind die Ausbringleitungen derart ausgelegt, vorzugsweise dimensioniert, dass die einer Mischkammer zugeordneten Teilströme auf ihren getrennten Teilströmungswegen von den Mischkammerauslässen zu den jeweiligen Ausbringelementen im Wesentlichen den gleichen Druckabfall und gleichen Zeitverzug, bis die Teilströme an dem jeweiligen Ausbringelement ankommen, aufweisen. Unter dem gleichen Zeitverzug können Unterschiede in den Zeitverzügen von kleiner 5 Sekunden, vorzugsweise kleiner 3 Sekunden, verstanden werden. Diese Ausbringleitungen können entsprechend ausgelegt werden, indem die Länge und/oder der Durchmesser der Ausbringleitungen, die an der gleichen Mischkammer angeschlossen sind, zweckmäßig festgelegt wird. Der Durchmesser der Ausbringleitungen ist bevorzugt gleich groß.

In einer weiteren Ausführungsvariante weisen diejenigen Ausbringleitungen, die an der gleichen Mischkammer angeschlossen sind, jeweils die gleiche Länge auf. Anders ausgedrückt haben in dieser Ausführungsform alle Ausbringleitungen jeweils einer Mischkammer die gleiche Länge, wohingegen optional die Möglichkeit besteht, dass Ausbringleitungen von verschiedenen Mischkammern unterschiedlich lang sein können. Hierbei können alle Ausbringleitungen jeweils einer Mischkammer ferner bevorzugt den gleichen Durchmesser aufweisen und entsprechend den gleichen Druckabfall innerhalb der Ausbringleitung aufweisen.

Gemäß einer Ausführungsvariante weisen jedoch alle Ausbringleitungen der Spritzvorrichtung die gleiche Länge auf. Anders ausgedrückt sind in dieser Variante alle Strömungswege durch die Ausbringleitungen zwischen einem Ausbringelement und dem jeweiligen Verteilerauslass, d. h. Auslass der Mischkammer, gleich lang. Dies bietet den Vorzug, dass die Teilströmungswege vom Verteilerauslass zum Ausbringelement für alle Ausbringelemente gleich lang sind, obwohl die räumlichen Abstände der Ausbringelemente zum Verteilerauslass, über den sie gespeist werden, zum Teil stark unterschiedlich sein können. Besonders bevorzugt ist, wenn alle Ausbringleitungen der Spritzvorrichtung gleich lang sind und den gleichen Durchmesser aufweisen und entsprechend den gleichen Druckabfall innerhalb der Ausbringleitung aufweisen. Folglich können Differenzen in den Zeitverzügen, bis die aus den Verteilerauslässen austretende Spritzflüssigkeit die hierüber gespeisten Ausbringelemente erreicht, vorteilhaft verhindert werden.

In einer bevorzugten weiteren Ausführungsvariante sind die Ausbringleitungen als Schlauchleitungen und/oder als flexible Leitungen ausgeführt oder umfassen zumindest Abschnitte, die als Schlauchleitungen und/oder als flexible Leitungen ausgeführt sind. Dies ermöglicht eine kosteneffiziente, platzsparende Anbringung der Ausbringleitungen am Ausleger. Alternativ können die Ausbringleitungen auch als Rohre ausgeführt sein oder Rohrleitungen umfassen, beispielsweise aus einem metallischen Werkstoff.

In einer weiteren Ausführungsvariante weisen die Ausbringleitungen oder zumindest ein Teil der Ausbringleitungen einen nicht-geraden Verlauf oder anders ausgedrückt, einen gekrümmten Verlauf, auf. Beispielsweise können die Ausbringleitungen oder zumindest ein Teil der Ausbringleitungen mindestens einen Abschnitt aufweisen, der in Längsrichtung des Auslegers entlang eines der Ausleger geführt ist und mindestens einen Abschnitt aufweisen, der in Vertikalrichtung entlang eines der Ausleger geführt ist. Ferner besteht optional die Möglichkeit, dass zumindest ein Teil der Ausbringleitungen S-förmig oder mäanderförmig geführt ist.

In einer weiteren Ausführungsform können die Ausbringleitungen einen Innendurchmesser von kleiner 10 mm, weiter vorzugsweise von kleiner 6 mm, aufweisen. Der Innendurchmesser kann beispielsweise 4 mm aufweisen. Dadurch können im Vergleich zu herkömmlichen Düsenrohren wesentlich höhere Strömungsgeschwindigkeiten erreicht werden. In einer weiteren Ausführungsform können die Ausbringleitungen eine Mindestlänge von 25 cm oder von mindestens 50 cm oder von mindestens 1 Meter aufweisen.

Vorstehend wurde bereits festgestellt, dass es besonders vorteilhaft ist, wenn die Ausbringleitungen die gleiche Länge aufweisen. In einer weiteren Ausführungsform unterscheiden sich die Ausbringleitungen in ihren Längen um nicht mehr als 30%, wodurch die Differenzen in den Zeitverzügen, bis Spritzflüssigkeit über die Ausbringleitungen die Ausbringelemente erreicht, im Vergleich zu einem herkömmlichen Düsenrohr ebenfalls vorteilhaft reduziert werden können.

In einer weiteren Ausführungsform können die Verteilerauslässe der Mischkammer nicht auf einer Geraden liegen. Dadurch kann die Mischkammer kompakter ausgeführt werden und der Bauraum zur Anordnung der Ausbringleitungen besser ausgenutzt werden.

In einer weiteren Ausführungsform sind die Ausbringleitungen derart ausgelegt, vorzugsweise dimensioniert, dass ein Druckabfall ausgehend von den Auslässen der Mischkammer bis zum jeweiligen Ausbringelement jeweils maximal 2 bar ist, weiter vorzugsweise jeweils maximal 1,5 bar ist.

Dies kann durch entsprechende zweckmäßige Wahl des Durchmessers und Länge der Ausbringleitung realisiert werden. Dies verbessert das möglichst gleichmäßige Ausbringen der Spritzflüssigkeit.

Alternativ oder zusätzlich können die Ausbringleitungen derart ausgelegt sein, dass ein Zeitverzug der Teilströme für ihren Strömungsweg von der Mischkammer bis zum Erreichen der jeweiligen Ausbringelemente jeweils maximal fünf Sekunden, weiter vorzugsweise maximal zwei Sekunden, weiter vorzugsweise maximal eine Sekunde, ist. Dies kann unter Berücksichtigung des am Auslass der Mischkammer im Spritzbetrieb anliegenden üblichen Fluiddrucks wiederum durch entsprechende zweckmäßige Wahl des Durchmessers und der Länge der Ausbringleitung realisiert werden. Dadurch können schnelle Reaktionszeiten beim An- und Abschalten des Spritzgestänges oder bei Wechsel der Spritzflüssigkeit ermöglicht werden.

In einer vorteilhaften weiteren Ausführungsform sind die Mischkammern der Teilabschnitte jeweils mittig in Längsrichtung des Auslegers am Teilabschnitt angeordnet. Anders ausgedrückt sind die Mischkammern mittig in Längsrichtung angeordnet zu der Gruppe an Ausbringelementen, die mit der Mischkammer fluidisch verbunden sind. Dies ermöglicht eine kompakte Anbringung der Ausbringleitungen am Ausleger. In einer alternativen Ausführungsform, in der jeder Ausleger nur eine zentrale Mischkammer aufweist, kann diese mittig in Längsrichtung am Ausleger angeordnet sein.

Ferner ist es möglich, dass am Mittelteil eine Mischkammer angeordnet ist.

Auch ist es denkbar, dass sich die Ausbringleitungen der Ausleger auch bis zum Mittelteil erstrecken, d.h. sich bis zu am Mittelteil angebrachten Ausbringelementen erstrecken.

Unter der Längsrichtung des Auslegers wird hier die Richtung verstanden, in der sich der Ausleger erstreckt und in der die Düsenstöcke entlang des Auslegers beabstandet zueinander angeordnet sind. Die Arbeitsbreite des Spritzgestänges ergibt sich aus der Länge des Spritzgestänges entlang dessen Längsrichtung im ausgeklappten Zustand. Unter der Vertikalrichtung der Ausleger wird die Richtung verstanden, die senkrecht zur Längsrichtung des Auslegers ist und senkrecht zu einer Fahrtrichtung der Feldspritze ist.

Jeder Ausleger kann wiederum mehrere zueinander in Transportstellung einklappbare und in Arbeitsstellung ausklappbare, durch Gelenke verbundene Gestängeabschnitte aufweisen, so dass jeder der beiden Ausleger eines Spritzgestänges gefaltet, vorzugsweise mehrfach gefaltet, werden kann, indem die jeweiligen Gestängeabschnitte an den Gelenkstellen für die Transportposition um 180° eingeklappt oder für die Arbeitsposition in gestreckte Lage auseinandergefaltet werden. Im ausgeklappten Zustand erstreckt sich das Spritzgestänge quer zur Fahrtrichtung der Feldspritze. Ein Teilabschnitt kann einem solchen Gestängeabschnitt oder einer Teilbreite des Auslegers bzw. des Spritzgestänges entsprechen. Aus dem Stand der Technik ist bekannt, dass Ausleger bzw. das Spritzgestänge in Teilbreiten unterteilt sein können, sodass nicht immer mit voller Arbeitsbreite gearbeitet werden muss. Die vorstehend genannten Gestängeabschnitte oder Teilbreiten des Spritzgestänges können jedoch auch jeweils mehrere der vorstehend genannten Teilabschnitte und entsprechend mehrere Mischkammern mit zugeordneten Ausbringelementen aufweisen. Hierdurch kann die Leitungslänge der Ausbringleitungen reduziert werden.

Hierbei ist jedem Teilabschnitt jeweils eine der Mischkammern zugeordnet, nämlich diejenige Mischkammer, die stromauf zu den dem jeweiligen Teilabschnitt zugeordneten Ausbringelementen angeordnet ist. Dies bietet den Vorzug, dass den Teilabschnitten jeweils unterschiedliche Spritzflüssigkeiten, insbesondere unterschiedliche Mischungen von Spritzflüssigkeiten, zuführbar sind, um eine teilflächenspezifische Ausbringung zu ermöglichen. Besonders bevorzugt ist, wenn die Mischkammer auch an dem Teilabschnitt, dem sie zugeordnet ist, angeordnet ist.

Die Spritzvorrichtung kann ferner Vorratsbehälter für Spritzflüssigkeit, z. B. Wasser, Pflanzenschutzmittel, Dünger und/oder dergl., aufweisen und/oder mindestens eine Behälteraufnahme zur lösbaren Halterung eines Vorratsbehälters, vorzugsweise eines Kanisters, für eine Spritzflüssigkeit, vorzugsweise ein Pflanzenschutzmittel in konzentrierter Form. Um die Spritzflüssigkeit von dem mindestens einen Vorratstank mit einem Förderdruck in Richtung der mindestens einen Mischkammer zu fördern, umfasst die Spritzvorrichtung in an sich bekannter Weise ein oder mehrere Druckerzeugungsglieder, z. B. in Form einer Pumpe (z.B. Kolbenpumpen, Kreiselpumpen oder dergl.) und/oder Kompressors, Durchflussmesser und Ventile (Dosierventile und/oder Rückschlagventile).

Gemäß einem weiteren Gesichtspunkt betrifft die Erfindung ferner eine landwirtschaftliche Feldspritze, umfassend eine Spritzvorrichtung, wie sie in diesem Dokument beschrieben ist. Die Feldspritze kann eine selbstfahrende oder eine mittels eines Zugfahrzeugs gezogene oder eine an ein Zugfahrzeug angebaute Feldspritze sein. Die selbstfahrende Verteilmaschine kann zudem eine autonom fahrende Landmaschine sein, beispielsweise eine vollautonom oder teilautonom fahrende Landmaschine.

Das Spritzgestänge der Spritzvorrichtung und/oder der Feldspritze weist eine hohe Arbeitsbreite auf, d. h. eine Arbeitsbreite, die wesentlich größer als eine Breite des Trägerfahrzeugs oder der Feldspritze ist, z. B. ein Vielfaches der Breite des Trägerfahrzeugs. Die Feldspritze kann in an sich bekannter Weise eine Stelleinrichtung, z. B. Pneumatik- oder Hydraulikzylinder, umfassen, mittels der eine Stellkraft erzeugbar ist, um das Verteilergestänge um die Schwenkachse zu bewegen. Zur beweglichen Halterung am Trägerfahrzeug kann das Spritzgestänge beispielsweise an einem Träger gelagert sein, der wiederum beispielsweise mit einem Aufbau- oder Rahmenabschnitt oder einer Rahmenkonstruktion des Trägerfahrzeugs und/oder mit einem starr oder beweglich gelagerten Stützabschnitt des Trägerfahrzeugs gekoppelt ist. Ferner kann der Träger höhenverstellbar an dem Aufbau- oder Rahmenabschnitt oder einer Rahmenkonstruktion des Trägerfahrzeugs angebracht sein, wobei die Höhenverstellung insbesondere mittels eines zwischen der Rahmenkonstruktion und dem Träger angebrachten Viergelenks, z. B. in Form eines Parallelogramms, erfolgen kann. Auch kann die Höhenverstellung mittels eines zwischen der Rahmenkonstruktion und dem Träger angebrachten Linearschlittens erfolgen. Zur Höhenverstellung kann dem Parallelogramm oder dem Linearschlitten z. B. ein Linearantrieb in Form eines Hydraulik- oder Pneumatikzylinders zugeordnet sein, so dass der Höhenabstand zwischen dem Verteilgestänge und einer Bodenoberfläche bzw. einem Pflanzenbestand variabel veränderbar ist. Die Schwenkachse kann ferner beispielsweise durch ein Kugelgelenk ausgebildet sein. Das Kugelgelenk ermöglicht nicht nur eine Verschwenkung um die Schwenkachse, sondern ferner um eine weitere Achse.

Ferner können die zwei seitlichen Ausleger der Spritzvorrichtung und/oder der Feldspritze jeweils über eine vertikale Schwenkachse drehbar mit einem Mittelteil des Spritzgestänges verbunden sein. Vorstehend wurde bereits festgestellt, dass jeder Ausleger optional zueinander verschwenkbare Segmente aufweisen kann, die um aufrechte Achsen zueinander verschwenkbar sind. Zusätzlich können diese Segmente optional ferner in einer senkrecht zur Fahrtrichtung der landwirtschaftlichen Verteilmaschine angeordneten Ebene relativ zueinander verschwenkbar sein, d.h. diese Segmente können um eine in Fahrtrichtung verlaufende Achse schwenkbar sein, um das Spritzgestänge möglichst gut an ein Bodenprofil anpassen zu können. Am Ausleger kann jeweils mindestens ein Abstandssensor zur Messung eines Abstands zum Boden oder Pflanzenbestand angeordnet sein, z. B. in Form eines Ultraschallsensors. Die Feldspritze und/oder das Spritzgestänge kann in an sich bekannter Weise ferner mindestens eine Sensoreinrichtung zur Erfassung einer Drehlage und/oder eine Drehgeschwindigkeit und/oder eine Beschleunigung des Verteilergestänges umfassen.

Die zuvor beschriebenen bevorzugten Ausführungsformen- und varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Perspektivansicht einer landwirtschaftlichen Feldspritze mit einem, eine Rahmenkonstruktion aufweisenden Chassis und einer Spritzeinrichtung;
- Figur 2A: eine perspektivische Ansicht einer Mischkammer der Spritzvorrichtung gemäß einer Ausführungsform der Erfindung;
- Figur 2B: eine Draufsicht im Schnitt der Mischkammer aus Figur 2A;
- Figur 2C: eine Seitenansicht im Schnitt der Mischkammer aus Figur 2A;
- Figur 3: eine schematische Ansicht einer Spritzvorrichtung mit zwei Mischkammern und angeschlossenen Ausbringleitungen gemäß einer weiteren Ausführungsform;
- Figur 4: eine schematische Ansicht einer Mischkammer mit angeschlossenen Zufuhrleitungen und Ausbringleitungen gemäß einer weiteren Ausführungsform; und
- Figur 5: eine schematische Ansicht einer Mischkammer mit angeschlossenen Zufuhrleitungen und Ausbringleitungen, die eine Verzweigungsstelle aufweisen, gemäß einer weiteren Ausführungsform.

Gleiche oder funktional äquivalente Elemente sind in den Figuren zum Teil mit denselben Bezugszeichen bezeichnet und zum Teil nicht gesondert beschrieben.

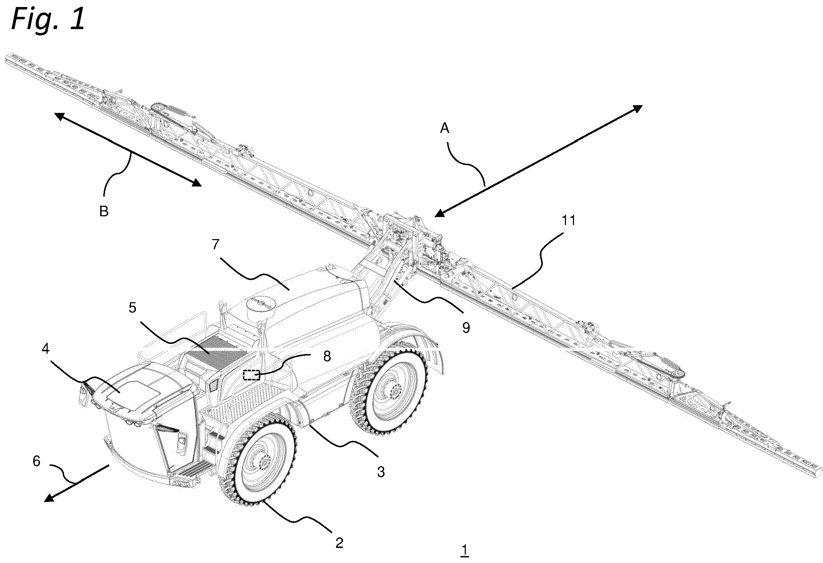

Figur 1 zeigt in einer Perspektivansicht eine Ausführungsvariante einer landwirtschaftlichen Feldspritze 1 mit einem, eine Rahmenkonstruktion aufweisenden Chassis 3, wobei das Chassis 3 zudem ein Fahrwerk 2 aufweist. Die Feldspritze 1 ist hier beispielhaft als eine selbstfahrende Feldspritze 1 ausgeführt und umfasst eine Kabine 4, mit einem Bedienstand für eine Bedienperson und eine Antriebseinrichtung 5 (z.B. Motor). Im hinteren Bereich umfasst die Feldspritze 1 ein sich in einer Arbeitsstellung befindendes und sich in großer Arbeitsbreite, z. B. 24 Meter oder mehr, quer zur Fahrtrichtung 6 erstreckendes Spritzgestänge 11, das um eine sich in Fahrtrichtung erstreckende Schwenkachse A mittels einer Stelleinrichtung verschwenkbar ist. Das Spritzgestänge 11, auch als Spritzbalkenanordnung bezeichnet, ist mittels eines höhenverstellbaren Parallelogrammgestänges 9 höhenverstellbar gegenüber dem Chassis 3. Am Chassis 3 ist zudem eine erfindungsgemäße Spritzvorrichtung angebaut, wobei in der Figur 1 hiervon lediglich das Spritzgestänge 11 und ein Vorratstank 7 dargestellt sind. Das Spritzgestänge 11 ist um eine in Fahrtrichtung A weisende Achse schwenkbar und umfasst ein Mittelteil und zwei seitliche Ausleger, die jeweils eine Mehrzahl von Ausbringelementen zum Versprühen und/oder Feinverteilen der Spritzflüssigkeit aufweisen. Ferner ist eine Steuereinrichtung 8 vorgesehen, die in Signalverbindung mit den einzelnen Komponenten der Spritzvorrichtung steht, wie den Ausbringelementen, Pumpen, Ventilen, Durchflussmessern, um diese zur Ausbringung von Spritzflüssigkeit entsprechend zweckmäßig anzusteuern.

Die Spritzvorrichtung umfasst ferner mehrere Mischkammern 20 (in Figur 1 nicht dargestellt) zum Vermischen von Spritzflüssigkeiten. Die Mischkammern 20 sind bevorzugt Mischkammern 20 eines Direkteinspeisesystems der Spritzvorrichtung.

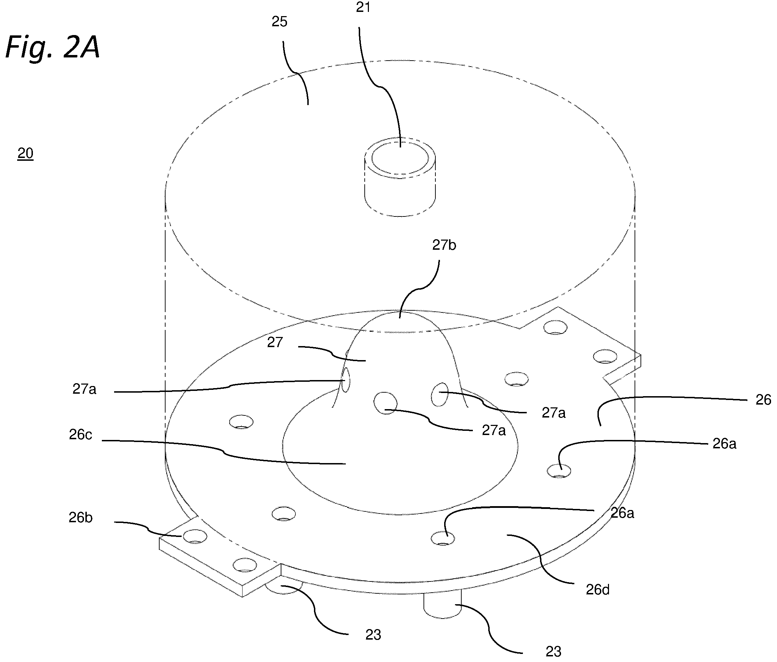

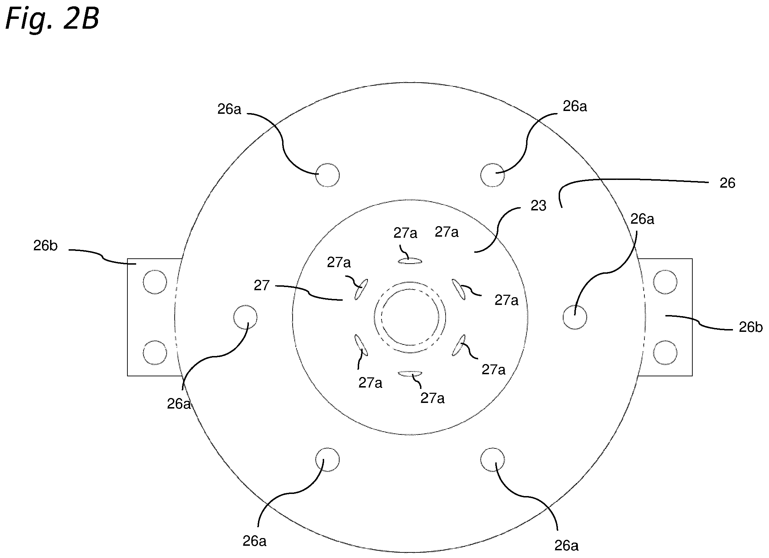

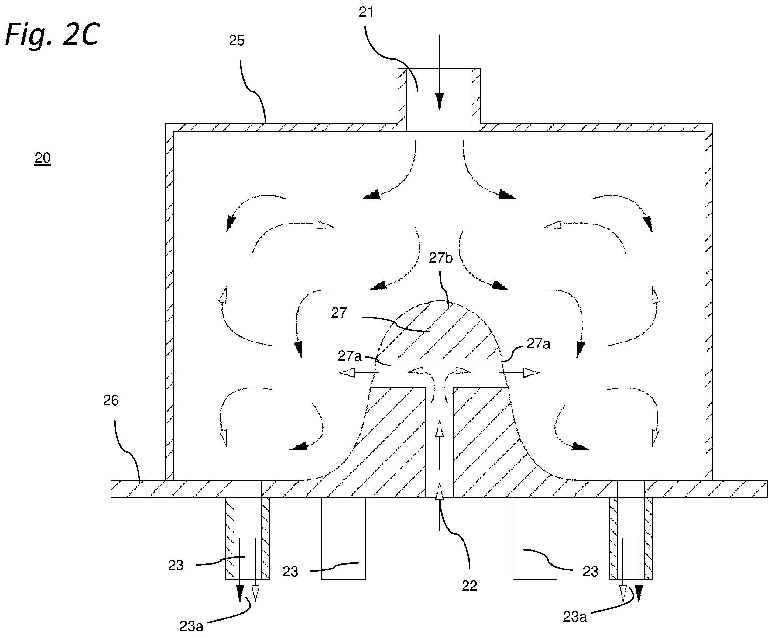

Figur 2A zeigt eine perspektivische Ansicht einer solchen Mischkammer 20 der Spritzvorrichtung gemäß einer Ausführungsform der Erfindung. Nachfolgend wird ferner Bezug genommen auf die Figur 2B, die eine Draufsicht im Schnitt der Mischkammer zeigt, sowie auf die Figur 2C, die eine Seitenansicht im Schnitt der Mischkammer aus Figur 2A.

Die zylinderförmige Mischkammer 20 umfasst einen ersten Einlass 21 zum Einlassen eines ersten Flüssigkeitsstroms, einen zweiten Einlass 22 zum Einlassen eines zweiten Flüssigkeitsstroms und mehrere Auslässe (Verteilerauslässe) 23 zum Auslassen des vermischten Flüssigkeitsstroms als mehrere Teilströme 23a. Der erste Flüssigkeitsstrom ist in Figur 2C durch die Pfeile mit schwarzen Pfeilspitzen und der zweite Flüssigkeitsstrom durch Pfeile mit weißen Pfeilspitzen illustriert.

Hierbei ist der erste Einlass 21 mittig an einer ersten Seite der Mischkammer 20 angeordnet. Der zweite Einlass 22 ist an einer der ersten Seite gegenüberliegenden zweiten Seite der Mischkammer angeordnet, dort in einem mittleren Bereich 26c der zweiten Seite. Die Auslässe 23 sind ebenfalls an der zweiten Seite der Mischkammer 20, die den Boden der Mischkammer bildet, angeordnet.

Die zweite Seite bzw. der Boden der Mischkammer 20 wird durch eine kreisringförmige plane Grundplatte 26 gebildet, die eine sich in den Innenraum der Mischkammer 20 hineinragende bzw. erstreckende Erhebung 27 umgibt. Die kreisförmige Grundplatte 26 und die Erhebung 27 können auch als ein Bauteil ausgeführt sein. Die Grundplatte weist nach außen abstehende Befestigungsabschnitte 26b auf, mit Durchgangslöchern, in welche jeweils ein stiftförmiges Befestigungselement, z. B. eine Schraube oder ein Bolzen, geführt sein kann, um die Mischkammer an einem Ausleger 12 des Spritzgestänges 11 zu befestigen.

Auf der Grundplatte 26 sitzt eine zylinderförmige Abdeckhaube 25, die mittig den ersten Einlass 21 in Form eines Anschlusses, z. B. eines Anschlussstutzens, für eine Fluidleitung aufweist. Die Erhebung 27 im Bodenbereich der Mischkammer 20 ist als eine domartig gewölbte oder haubenartige Erhebung ausgebildet. Die Erhebung weist an ihrer Spitze bzw. ihrem distalen Ende einen geschlossenen gewölbten Mittelbereich 27b auf, der fluchtend unterhalb zum ersten Einlass 21 angeordnet ist. Die Erhebung weist unterhalb des gewölbten Mittelbereichs 27b mehrere Durchgangsöffnungen bzw. Eintrittsöffnungen 27a auf, die kreisförmig an der Mantelfläche der Erhebung 27 angeordnet sind. Die Eintrittsöffnungen 27a sind Teil des zweiten Einlasses 22 oder mit diesem fluidisch verbunden, so dass der zweite Flüssigkeitsstrom über die mehreren Eintrittsöffnungen 27a in den Innenraum der Mischkammer 20 eintritt. Hierbei mündet der an der zweiten Seite bzw. Unterseite der Mischkammer 20 mittig unterhalb der Erhebung 27 angeordnete zweite Einlass 22 in einen Einlasskanal, der sich innerhalb der Erhebung 27 zuerst in Richtung der gegenüber liegenden ersten Seite der Mischkammer erstreckt und anschließend um ca. 90° Grad abknickt und aufteilt, um den eintretenden zweiten Flüssigkeitsstrom den Eintrittsöffnungen 27a zuzuleiten. Die Eintrittsöffnungen 27a sind derart an der Erhebung angeordnet, dass der zweite Flüssigkeitsstrom in Form mehrerer Teilströme im Wesentlichen parallel zur zweiten Seite und fächerartig oder kreisscheibenartig in den Innenraum der Mischkammer einströmt.

Gleichzeitig ist der erste Einlass 21 mittig an der ersten Seite und fluchtend zu dem geschlossenen Mittelbereich 27b bzw. Spitze der Erhebung 27 angeordnet, so dass ein über den ersten Einlass 21 eintretender Flüssigkeitsstrom zumindest teilweise auf den geschlossenen gewölbten Mittelbereich 27b der Erhebung 27 trifft und von dort in Umfangsrichtung gleichmäßig verteilt abgelenkt wird. Dies führt dazu, dass sich die Strömungswege des ersten Flüssigkeitsstroms und die Strömungswege des zweiten Flüssigkeitsstroms kreuzen, was in Figur 2c illustriert ist. Die dadurch entstehenden Verwirbelungen und Turbulenzen führen zu einer möglichst homogenen Durchmischung der beiden Flüssigkeitsströme. Der resultierende vermischte Flüssigkeitsstrom wird über Austrittsöffnungen 26a und die sich daran anschließenden Auslässe 23, die jeweils kreisförmig um die Erhebung 27 an der Bodenplatte 26 angeordnet sind, aus dem Innenraum der Mischkammer 20 herausgeleitet. Die Auslässe 23 sind an der Unterseite der Grundplatte 26 als Anschlüsse, z. B. als Anschlussstutzen, für Fluidleitungen ausgebildet. Vorliegend sind lediglich beispielhaft sechs Verteilerauslässe 23 vorgesehen. Es können jedoch je nachdem, wie viele separate Leitungen an die Mischkammer 20 zur Weiterleitung der vermischten Spritzflüssigkeit angeschlossen werden, auch selbstverständlich eine andere Anzahl von Verteilanschlüssen 23 vorgesehen sein, z. B. acht, wie im nachfolgenden Beispiel beschrieben ist.

Die vorstehend beschriebene Mischkammer 20 bildet somit einen Raumbereich aus, in dem zwei Spritzmittelströme aufeinandertreffen und miteinander vermischt werden. Hierbei sind die Zuleitungsanschlüsse für die Spritzmittelströme so an der Mischkammer 20 angeordnet und ausgebildet, dass die zwei Spritzmittelströme ins Mischkammerinnere eingeleitet werden und sich dort kreuzen und vermischen. Um eine gute Durchmischung zu ermöglichen, ist die ins Mischkammerinnere hineinragende Erhebung 27 vorgesehen, die einerseits ein Ablenkelement für den erste Spritzmittelstrom ausbildet, um diesen senkrecht zu einer Eintritts- und Austrittsrichtung abzulenken und andererseits dazu dient, den anderen Spritzmittelstrom beim Eintritt in einzelne Teilstrahlen aufzufächern und in einer Richtung senkrecht zur Auslassrichtung abzulenken. Die dadurch entstehenden Verwirbelungen und Turbulenzen stellen sicher, dass die beiden Spritzflüssigkeiten zuverlässig vermischt werden, bevor diese als vermischter Spritzmittelstrom in Form einzelner vermischter Teilströme über die Auslässe 23 austreten und den Ausbringleitungen zugeleitet werden.

Der Mischkammer 20 ist insbesondere ausgebildet, die zugeführten Flüssigkeitsströme nicht nur zu vermischen, sondern die resultierende vermischte Spritzflüssigkeit in mehrere Teilströme 23a aufzuteilen, die jeweils über einen der Verteilerauslässe 23 aus der Mischkammer 20 austreten. Die Mischkammer dient somit gleichzeitig als Fluidverteiler zum Aufteilen eines vermischten Flüssigkeitsstroms in mehrere Teilströme, um die in der Mischkammer entstehende Mischung mindestens zweier Spritzflüssigkeiten in Teilströme aufzuteilen und mittels der mehreren Auslässe auf getrennten Teilströmungswegen aus der Mischkammer auszuleiten.

Der erste Einlass 21 und/oder der zweite Einlass 22 und/oder die Auslässe 23 können in die Abdeckhaube 25 oder die Grundplatte eingeschraubt sein oder mit dieser jeweils verschweißt, verklebt, verlötet oder dergl. sein. Auch können diese jeweils ein Innen- oder Aussengewinde zur Montage der jeweiligen Leitung aufweisen.

Um die Mischkammer 20, respektive die Bauteile der Mischkammer möglichst rückstandslos reinigen zu können, kann/können diese zweckmäßig aus Edelstahl gefertigt sein. Auch Kunststoffe mit entsprechend geringe Rauigkeiten aufweisenden Oberflächen wären denkbar.

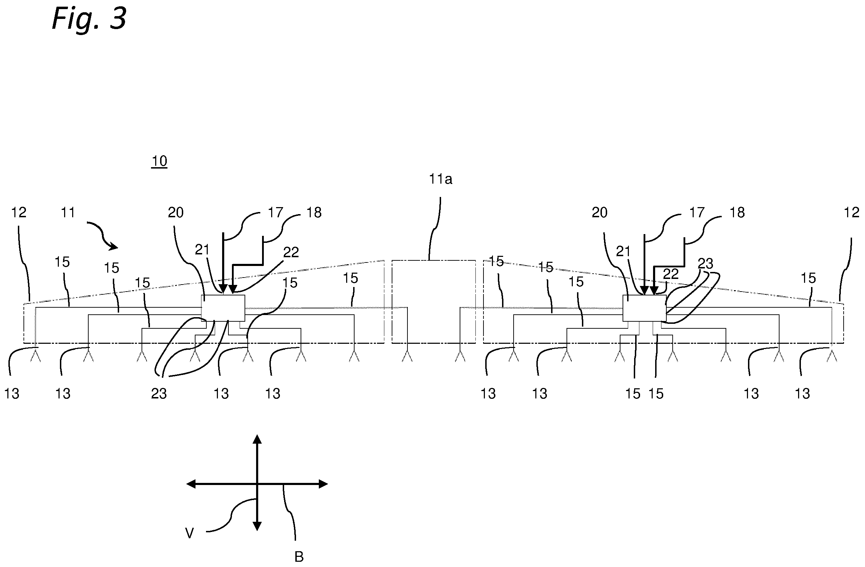

Figur 3 zeigt eine schematische Ansicht 10 einer Spritzvorrichtung mit zwei Mischkammern 20 und angeschlossenen Ausbringleitungen 15 gemäß einer weiteren Ausführungsform. Die Spritzvorrichtung 10 dient zum dosierten Ausbringen von Spritzflüssigkeit auf landwirtschaftlichen Nutzflächen. Die in Figur 3 dargestellte Spritzvorrichtung 10 ist für eine Feldspritze ausgeführt, die eine kleinere Arbeitsbreite aufweist als die in Figur 1 gezeigte Feldspritze 1. Die Spritzvorrichtung 10 umfasst das schwenkbare Spritzgestänge 11, welches zwei seitliche Ausleger 12 aufweist, die jeweils eine Mehrzahl von Ausbringelementen 13 zum Versprühen und/oder Feinverteilen der Spritzflüssigkeit aufweisen. Die Ausbringelemente 13 erzeugen einen zum Boden bzw. zum Pflanzenbestand hin ausgerichteten Sprühkegel zum gewünschten Verteilen des Wirkstoffes. Das Ausbringelement 13 kann eine Spritzdüse oder ein Düsenträger sein, in dem wiederum wenigstens eine Spritzdüse angebracht ist. Die Ausbringelemente 13 sind in Figur 3 nur schematisch anhand des von ihnen erzeugten Sprühkegels (könnte auch sog. Spritzfächer sein) dargestellt. Die Längsrichtung des Spritzgestänges 11 bzw. der Ausleger 12 ist durch den Pfeil B gekennzeichnet, die Vertikalrichtung des Spritzgestänges 11 bzw. der Ausleger 12 durch den Pfeil V.

Die zwei seitlichen Ausleger 12 sind jeweils über eine in Fahrtrichtung verlaufende Schwenkachse A drehbar mit einem Mittelteil 11a des Spritzgestänges 11 verbunden. An jedem Ausleger 12 ist eine Mischkammer 20 angeordnet, wie vorstehend beschrieben, jedoch mit acht Auslässen bzw. Verteileranschlüssen 23, zum Vermischen zweier Spritzflüssigkeiten und anschließendem Verteilen der vermischten Spritzflüssigkeit auf mehrere Teilströme. Den Mischkammern 20 werden über Zufuhrleitungen 17, 18 die beiden zu vermischenden Spritzflüssigkeiten zugeleitet. Die Zufuhrleitungen sind somit an die Einlässe 21, 22 angeschlossen. An die zuvor beschriebenen Auslässe (Verteilerauslässe) 23 sind jeweils Ausbringleitungen 15 angeschlossen.

Hierbei ist jedes der Ausbringelemente 13 über eine separate Ausbringleitung 15 mit einem der Verteilerauslässe 23 fluidisch verbunden. Der besseren Übersichtlichkeit wegen ist nicht jedes Ausbringelement 13, nicht jede Ausbringleitung 15 und nicht jeder Verteilerauslass 23 gesondert mit einem Bezugszeichen gekennzeichnet. In dem gezeigten Beispiel sind jedoch insgesamt 16 in Längsrichtung B des Spritzgestänges 11 gleichmäßig beabstandet angeordnete Ausbringelemente 13 dargestellt, denen jeweils über eine eigene Ausbringleitung 15 Spritzflüssigkeit zugeführt wird. Entsprechend weist jede Mischkammer 20 in diesem Beispiel acht Verteilerauslässe 23 auf und an jede Mischkammer 20 sind entsprechend acht Ausbringleitungen 15 angeschlossen. Die Anzahl an Mischkammern, Verteilerauslässen, Ausbringelementen und Ausbringleitungen sind hier nur beispielhaft. Bei Spritzgestängen mit größeren Arbeitsbreiten können entsprechend mehrere Mischkammern pro Ausleger und eine höhere Anzahl von Ausbringelementen und Ausbringleitungen vorgesehen sein und/oder die Anzahl von Verteilerauslässen pro Mischkammer variiert werden.

Die Spritzvorrichtung 10 umfasst ferner zwei oder mehr Vorratstanks oder Vorratsbehälter für Spritzflüssigkeit, z. B. Wasser, Pflanzenschutzmittel, Dünger und/oder dergl.

Um die Spritzflüssigkeit von den Vorratstanks oder Vorratsbehälter mit einem Förderdruck in Richtung der mindestens einen Mischkammer 20 zu fördern, umfasst die Spritzvorrichtung 10 z. B. eine oder mehrere Pumpen (z.B. Kolbenpumpen, Kreiselpumpen oder dergl.), entsprechende Flüssigkeitsleitungen und/oder Kreisläufe, sowie steuerbare Ventileinheiten, Durchflussmesser etc. Diese können in an sich bekannter und unterschiedlicher Weise ausgeführt sein. Der Aufbau der Spritzvorrichtung bzw. der Flüssigkeitsplan stromauf zu den Mischkammern 20 ist daher hier bis auf die Zufuhrleitungen 17, 18 nicht näher dargestellt.

Die Mischkammer 20 vermischt zwei dieser zugeführten Spritzflüssigkeitsströme und verzweigt den im Mischkammerinneren entstehenden vermischten Spritzflüssigkeitsstrom in Teilströme und gibt diese über die Verteilerauslässe 23 aus. Diese Teilströme werden dann über die Ausbringleitungen 15 auf getrennten Teilströmungswegen von der Mischkammer 20 zu den jeweiligen Ausbringelementen 13 gefördert. Das Vorsehen separater Ausbringleitungen 15 anstatt einer herkömmlichen Düsenleitung, die mehrere Ausbringelemente nacheinander speist, bietet den Vorzug, dass diese Ausbringleitungen 15 mit kleinerem Durchmesser ausgeführt werden können, da diese nur eine Teilmenge der Spritzflüssigkeit, nämlich nur die Spritzflüssigkeit, die über ein einzelnes Ausbringelement 13 ausgebracht wird, fördern müssen. Entsprechend schneller ist die Strömungsgeschwindigkeit in den einzelnen Ausbringleitungen 15 im Vergleich zu einem Düsenrohr, so dass insgesamt eine schnellere Reaktionszeit erzielt werden kann.

Diese Ausbringleitungen 15 sind hier als Schlauchleitungen und/oder als flexible Leitungen ausgeführt, die einen nicht-geraden (gekrümmten) Verlauf aufweisen. Die Ausbringleitungen sind so dimensioniert, dass es auf dem Weg vom Verteilerauslass 23 zum jeweiligen Ausbringelement 13 zu einem Druckabfall von jeweils maximal 1 bar kommt und ein Zeitverzug der Teilströme für ihren Strömungsweg von der Mischkammer 20 bis zum Erreichen der jeweiligen Ausbringelemente 13 jeweils maximal fünf Sekunden ist. Die Mischkammern 20 sind hier mittig in Längsrichtung B jeweils eines der Ausleger 12 angeordnet.

Vorstehend wurde bereits angemerkt, dass in Figur 3 ein Spritzgestänge 11 dargestellt ist, das eine kleine Arbeitsbreite aufweist. In einer weiteren Ausführungsform (nicht dargestellt), die für größere Arbeitsbreiten, wie z. B. für das in Figur 1 gezeigte Spritzgestänge 11 vorteilhaft ist, ist jeder Ausleger in mehrere Teilabschnitte unterteilt, wobei an jedem Teilabschnitt eine Mehrzahl von Ausbringelementen angeordnet ist und jedes Ausbringelement genau einem Teilabschnitt zugeordnet ist. In dieser Ausführungsform weist jeder Ausleger mehrere Mischkammern 20 auf, derart, dass an jedem Teilabschnitt eine Mischkammer angeordnet ist und die dem jeweiligen Teilabschnitt zugeordneten Ausbringelemente mit der Mischkammer 20 dieses Teilabschnitts über entsprechende Ausbringleitungen verbunden sind. So kann jeder der Ausleger 12 zwei, drei, vier oder mehr Mischkammern 20 aufweisen, die in Längsrichtung B des Auslegers 12 beabstandet voneinander längs des Auslegers an diesem angeordnet sind. Entsprechend ist eine Gruppe von Ausbringelementen, die bestimmten Teilabschnitt und Mischkammer 20 zugeordnet sind, in Längsrichtung benachbart zu einer weiteren Gruppe von Ausbringelementen angeordnet, die einem benachbarten Teilabschnitt und einer benachbarten Mischkammer zugeordnet sind.

Hierzu kann jeder Ausleger 12 mehrere zueinander in Transportstellung einklappbare und in Arbeitsstellung ausklappbare, durch Gelenke verbundene Gestängeabschnitte aufweisen, so dass jeder der beiden Ausleger eines Spritzgestänges mehrfach gefaltet werden kann, indem die jeweiligen Gestängeabschnitte an den Gelenkstellen für die Transportposition um 180° eingeklappt oder für die Arbeitsposition in gestreckte Lage auseinandergefaltet werden. Im ausgeklappten Zustand erstreckt sich das Spritzgestänge quer zur Fahrtrichtung der Feldspritze.

Die vorgenannte Unterteilung in Teilabschnitte kann dieser Unterteilung in relativ zueinander beweglichen Gestängeabschnitten entsprechen. Alternativ kann jeder dieser Gestängeabschnitte mehrere, also mindestens zwei, Teilabschnitte aufweisen, so dass in dem Gestängeabschnitt mindestens zwei Mischkammern mit zugeordneten Ausbringelementen angeordnet sind. Hierdurch kann die Leitungslänge der Ausbringleitungen reduziert werden. Auch die am Mitteilteil angeordneten Ausbringelemente 13 können einem Teilabschnitt entsprechen oder, wie in Figur 3 gezeigt, Teilabschnitten zugeordnet sein.

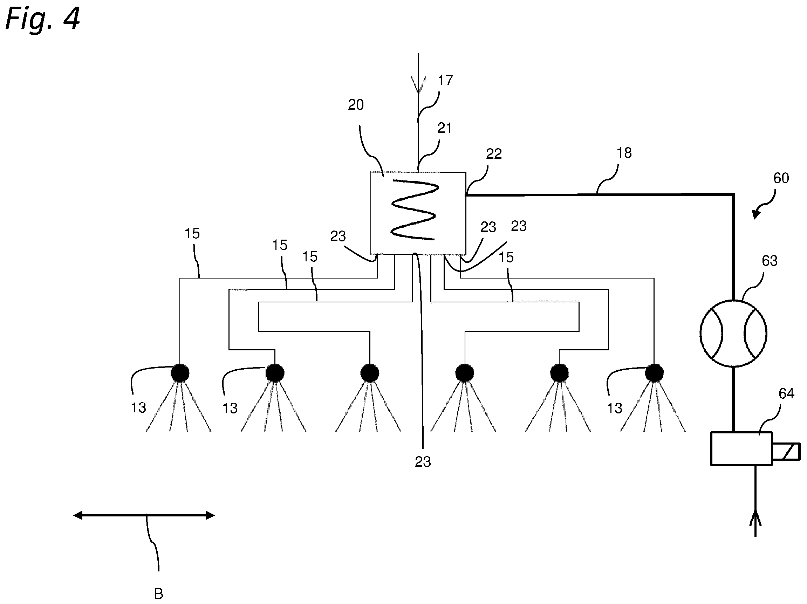

Es ist besonders vorteilhaft, die Ausbringleitungen 15 so auszuführen, dass sie gleich lang sind, so dass der Strömungsweg vom Verteilerauslass 23 bis zum jeweiligen Ausbringelement 13 für alle Ausbringleitungen 15 gleich lang ist. Differenzen im Zeitverzug, bis Spritzflüssigkeit den Strömungsweg vom Verteilerauslass bis zu den Ausbringelementen zurückgelegt hat, können so vermieden werden. Eine solche Ausführungsform ist in Figur 4 gezeigt, wobei hier nur zur Verdeutlichung dieses Aspekts eine einzige Mischkammer 20 mit zugeordneten Ausbringleitungen 15 und Ausbringelementen 13 dargestellt ist, sowie mit einer Dosiereinrichtung für eine der Zufuhrleitungen. Die anderen (nicht dargestellten) Mischkammern und Elemente der Spritzvorrichtung 10 und des Spritzgestänges 11 können wie zuvor beschrieben ausgeführt sein.

Am ersten Einlass 21 der Mischkammer 20 ist wiederum eine erste Zufuhrleitung 17 angeschlossen, um der Mischkammer eine erste Spritzflüssigkeit, z. B. eine Hauptmischung aus einem Haupttank der Feldspritze, zuzuführen. Am zweiten Einlass 22 der Mischkammer ist eine zweite Zufuhrleitung 18 angeschlossen, um der Mischkammer 20 eine zweite Spritzflüssigkeit, z. B. ein vorverdünntes Pflanzenschutzmittel aus einem weiteren Vorratsbehälter, z. B. einem Kanister, zuzuführen. Ferner ist eine Dosiereinrichtung 60, umfassend einen Durchflussmesser 63 sowie ein Dosierventil 64 gezeigt, um die in die Mischkammer 20 eingebrachte Menge der zweiten Spritzflüssigkeit je nach Bedarf dosieren zu können. Um eine teilflächenspezifische Applikation zu ermöglichen, kann das Dosiersystem 60 beispielsweise bei Bedarf so von der Steuereinrichtung 8 angesteuert werden, dass der Mischkammer 20 z. B. zusätzlich zum über die Leitung 17 zugeleiteten Hauptgemisch ein Pflanzenschutzmittel über die Leitung 18 zudosiert und mit dem Hauptgemisch in der Mischkammer 20 vermischt wird. Das Pflanzenschutzmittel kann z. B. selektiv nur einer Mischkammer 20 oder einer Teilmenge der Mischkammern 20 des Spritzgestänges zugeführt werden, so dass nur über diejenigen Ausbringelemente 13, die stromab zu dieser einen Mischkammer 20 oder dieser Teilmenge von Mischkammern 20 angeordnet sind, das Pflanzenschutzmittel zur teilfächenspezifischen Applikation ausgebracht wird.

In dem gezeigten Beispiel sind der Mischkammer 20 lediglich beispielhaft sechs Ausbringelemente 13 zugeordnet und über entsprechende Ausbringleitungen 15 an der Mischkammer 20 angeschlossen. Obwohl die räumlichen Abstände der einzelnen Ausbringelemente 13 zum Verteilerauslass 23 der Mischkammer 20, über die sie gespeist werden, zum Teil stark unterschiedlich sind, sind alle sechs Ausbringleitungen 15 gleich lang und weisen denselben Durchmesser auf. Folglich weisen alle Ausbringleitungen 15 den gleichen Druckabfall und den gleichen Zeitverzug auf, bis Spritzflüssigkeit die Ausbringelemente 13 erreicht. Entsprechend kann eine besonders gleichmäßige Ausbringung von Spritzflüssigkeit erzielt werden. Die anderen Mischkammern (nicht dargestellt) der Spritzvorrichtung können identisch aufgebaut sein. Hierbei können die Ausbringleitungen 15 aller Mischkammern die gleiche Länge aufweisen.

Vorstehend wurde bereits festgestellt, dass alternativ hierzu auch die Möglichkeit besteht, dass z. B. zwar alle Ausbringleitungen einer Mischkammer die gleiche Länge aufweisen, jedoch Ausbringleitungen unterschiedlicher Mischkammern unterschiedlich lang sein können. Hierbei können die sich hieraus ergebenen unterschiedlichen Durchflusszeiten durch die Ausbringleitungen unterschiedlicher Mischkammern durch eine Steuereinrichtung 8 entsprechend bei der zeitlichen Ansteuerung der Ausbringelemente 13 berücksichtigt werden. Beispielsweise können in einer Steuereinrichtung 8, z. B. ein zentrales Steuergerät zum Steuern des Spritzvorgangs, welches zur Steuerung der Ausbringelemente 13 mit diesen in Signalverbindung steht, Offset-Werte hinterlegt sein, die ein Maß für die unterschiedlichen Durchflusszeiten je Mischkammer angeben. Entsprechend können unter Verwendung derartiger Offset-Werte die Schaltzeiten für die Ausbringelemente exakt eingehalten werden, wenn einzelne Teilabschnitte des Auslegers einzeln angesteuert werden, so dass trotz teilweiser unterschiedlicher Länge der Ausbringleitungen die Spritzflüssigkeit im Wesentlichen zum gleichen Zeitpunkt aus den Ausbringleitungen austritt.

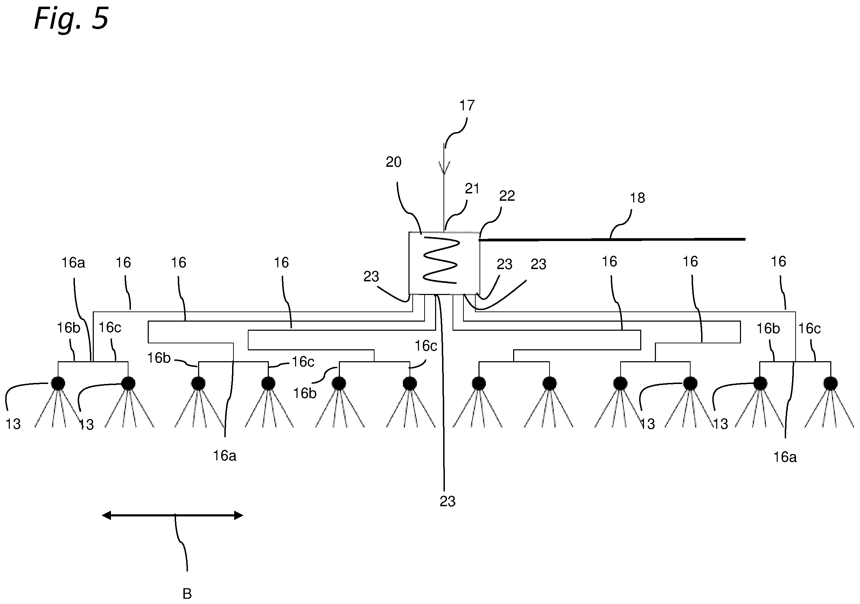

Figur 5 zeigt eine schematische Ansicht einer Mischkammer 20 mit angeschlossenen Ausbringleitungen gemäß einer weiteren Ausführungsform. Die Besonderheit dieser Ausführungsform liegt darin, dass die Ausbringelemente 13 jeweils nicht über separate Ausbringleitungen angeschlossen sind, sondern dass die Ausbringleitungen 16 jeweils eine Verzweigungsstelle 16a aufweisen. Zur Verdeutlichung dieses Aspekts ist in Figur 4 wiederum nur eine der Mischkammern 20 mit zugeordneten Ausbringleitungen 16 und Ausbringelementen 13 dargestellt ist. Die anderen (nicht dargestellten) Mischkammern und weiteren Elemente der Spritzvorrichtung 10 und des Spritzgestänges 11 können wie zuvor beschrieben ausgeführt sein. Der besseren Übersichtlichkeit ist wiederum nur ein Teil der Komponenten mit Bezugszeichen gekennzeichnet.

Wie in Figur 5 erkennbar ist, weisen alle Ausbringleitungen 16 der Mischkammer 20, die hier lediglich beispielhaft sechs Ausbringleitungen 16 aufweist, jeweils eine Verzweigungsstelle 16a auf. Jede der Verzweigungsstellen 16a stellt zwei Leitungszweige 16b, 16c bereit. Die Verzweigungsstelle 16a ist nach Art einer Y-Verzweigung bzw. T-Verzweigung ausgebildet, so dass jeder Leitungszweig 16b, 16c an seinem freien Ende an ein Ausbringelement 13 angeschlossen ist. Der vom Verteilerauslass 23 kommende Teilstrom teilt sich somit an der Verzweigungsstelle 16a nochmals in zwei weitere Teilströme auf. Auch hier sind wieder alle Ausbringleitungen 16 der Mischkammer 20 identisch ausgeführt, so dass der Zeitverzug, bis Spritzflüssigkeit von einem Verteilerauslass 23 das jeweilige Ausbringelement 13 erreicht, gleich ist. Die anderen Mischkammern (nicht dargestellt) der Spritzvorrichtung können identisch aufgebaut sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls in den von den angehängten Ansprüchen definierten Schutzbereich fallen.
- 1: Landwirtschaftliche Feldspritze, z. B. gezogene Feldspritze
- 2: Fahrwerk
- 3: Chassis
- 4: Kabine
- 5: Antriebseinrichtung
- 6: Fahrtrichtung
- 7: Vorratstank
- 8: Steuereinrichtung
- 9: Höhenverstellbares Parallelogrammgestänge
- 10: Spritzvorrichtung
- 11: Spritzgestänge
- 11a: Mittelteil
- 12: Seitlicher Ausleger
- 13: Ausbringelement, z. B. Spritzdüse
- 15: Ausbringleitung
- 16: Ausbringleitung
- 16a: Verzweigungsstelle
- 16b: Leitungszweig
- 16c: Leitungszweig
- 17: Mischkammerzufuhrleitung
- 18: Mischkammerzufuhrleitung
- 20: Mischkammer
- 21: Erster Einlass
- 22: Zweiter Einlass
- 23: Auslass
- 23a: Teilströme
- 24: Auslass
- 25: Abdeckhaube
- 26: Grundplatte, z.B. Bodenplatte
- 26a: Austrittsöffnung
- 26b: Befestigungsbereich
- 26c: Mittlerer Bereich
- 26d: Äußerer Bereich
- 27: Erhebung
- 27a: Durchgangsöffnung/ Eintrittsöffnung
- 27b: Mittelbereich der Erhebung
- 60: Dosiereinrichtung
- 63: Durchflussmesser 63
- 64: Dosierventil 64
- A: Schwenkachse in Fahrtrichtung
- B: Längsrichtung des Auslegers
- V: Vertikalrichtung des Auslegers

## Patentansprüche

1. Spritzvorrichtung (10) für eine landwirtschaftliche Feldspritze zum dosierten Ausbringen von Spritzflüssigkeit, vorzugsweise auf landwirtschaftlichen Nutzflächen, umfassend
a) ein schwenkbares Spritzgestänge (11), umfassend zwei seitliche Ausleger (12), die jeweils eine Mehrzahl von Ausbringelementen (13) zum Versprühen und/oder Feinverteilen der Spritzflüssigkeit aufweisen, und
b) mindestens eine Mischkammer (20) zum Vermischen mehrerer Spritzflüssigkeiten, umfassend
- einen ersten Einlass (21) zum Einlassen eines ersten Flüssigkeitsstroms,
- einen zweiten Einlass (22) zum Einlassen eines zweiten Flüssigkeitsstroms, und
- mehrere Auslässe (23) zum Auslassen des vermischten Flüssigkeitsstroms als mehrere Teilströme (23a),
wobei der erste Einlass (21) an einer ersten Seite der Mischkammer (20) angeordnet ist und der zweite Einlass (22) an einer der ersten Seite gegenüberliegenden zweiten Seite der Mischkammer (20) angeordnet ist, **dadurch gekennzeichnet, dass** die zweite Seite eine sich in einen Innenraum der Mischkammer erstreckende Erhebung (27) aufweist, die mehrere Durchgangsöffnungen (27a) aufweist, wobei der zweite Flüssigkeitsstrom über die mehreren Durchgangsöffnungen (27a) in den Innenraum der Mischkammer (20) eintritt.

2. Spritzvorrichtung (10) nach Anspruch 1, wobei der erste Einlass (21) und der zweite Einlass (22) so ausgeführt und/oder angeordnet sind, dass sich der Strömungspfad des ersten Flüssigkeitsstroms und der Strömungspfad des zweiten Flüssigkeitsstroms in der Mischkammer (20) kreuzen, vorzugsweise im Wesentlichen senkrecht kreuzen.

3. Spritzvorrichtung (10) nach Anspruch 1 oder 2, wobei der erste Einlass (21) an der ersten Seite der Mischkammer (20) mittig angeordnet ist und/oder der zweite Einlass (22) in einem mittleren Bereich (26c) der zweiten Seite der Mischkammer (20) angeordnet ist.

4. Spritzvorrichtung (10) nach einem der vorherigen Ansprüche, wobei die Erhebung (27) als eine domartig gewölbte oder haubenartige Erhebung ausgebildet ist.

5. Spritzvorrichtung (10) nach einem der vorherigen Ansprüche,
a) wobei die Durchgangsöffnungen derart an der Erhebung angeordnet sind, dass der zweite Flüssigkeitsstrom in Form mehrerer Teilströme fächerartig, kreisscheibenartig, trichterartig oder ähnlich den Stufen einer Wendeltreppe verteilt in den Innenraum der Mischkammer einströmt; und/oder
b) wobei die Durchgangsöffnungen (27a) in Umfangsrichtung verteilt an einer seitlichen Mantelfläche der Erhebung (27) angeordnet sind, derart, dass eine Eintrittsströmungsrichtung des aus den Durchgangsöffnungen in den Innenraum der Mischkammer eintretenden zweiten Flüssigkeitsstroms senkrecht zu einer Eintrittsströmungsrichtung am ersten Einlass (21) ist.

6. Spritzvorrichtung (10) nach einem der vorherigen Ansprüche, wobei der erste Einlass (21) mittig über der Erhebung (27) angeordnet ist, derart, dass ein über den ersten Einlass (21) eintretender Flüssigkeitsstrom zumindest teilweise auf einen geschlossenen gewölbten Mittelbereich (27b) der Erhebung (27) trifft und von dort abgelenkt wird, vorzugsweise in Umfangsrichtung gleichmäßig verteilt abgelenkt wird.

7. Spritzvorrichtung (10) nach einem der vorherigen Ansprüche, wobei die Erhebung (27) an einem mittleren Bereich der zweiten Seite angeordnet ist und die mehreren Auslässe (23) an einem den mittleren Bereich (26c) umgebenden äußeren Bereich (26d) der zweiten Seite angeordnet sind.

8. Spritzvorrichtung (10) nach einem der vorherigen Ansprüche, wobei die mehreren Auslässe (23) an der zweiten Seite kreisförmig und/oder konzentrisch zur Erhebung (27) angeordnet sind.

9. Spritzvorrichtung (10) nach einem der vorherigen Ansprüche, wobei die Mischkammer (20) zylinderförmig ausgeführt ist, umfassend eine kreisförmige oder kreisringförmige plane Grundplatte (26), aufweisend die Auslässe (23) und den zweiten Einlass (22), und eine zylinderförmige Abdeckhaube (25), aufweisend den ersten Einlass (21).

10. Spritzvorrichtung (10) nach einem der vorherigen Ansprüche, wobei die Mischkammer einen Turbulator oder Rührwelle zur Erzeugung von Turbulenzen umfasst.

11. Spritzvorrichtung (10) nach einem der vorherigen Ansprüche, wobei die Mischkammer eine Mischkammer eines Direkteinspeisesystems der Spritzvorrichtung ist.

12. Spritzvorrichtung (10) nach einem der vorherigen Ansprüche, umfassend mehrere der Mischkammern (20), wobei
a) das Spritzgestänge (11), und vorzugsweise jeder der Ausleger (12), in mehrere Teilabschnitte unterteilt ist, wobei an jedem Teilabschnitt (19) eine Mehrzahl der Ausbringelemente (13) zum Versprühen und/oder Feinverteilen der Spritzflüssigkeit angeordnet ist und jedes Ausbringelement (13) genau einem Teilabschnitt zugeordnet ist; und
b) jedem Teilabschnitt jeweils eine der Mischkammern (20) zugeordnet ist, die stromauf zu den dem jeweiligen Teilabschnitt zugeordneten Ausbringelementen (13) und vorzugsweise am Teilabschnitt angeordnet ist; und
c) die stromab zu der jeweiligen Mischkammer (20) angeordneten Ausbringelemente (13) jeweils über eine Ausbringleitung (15; 16) mit einem der Auslässe (23) der jeweiligen Mischkammer (20) verbunden sind.

13. Spritzvorrichtung (10) nach Anspruch 12, wobei
a) jedes der Ausbringelemente (13) über eine separate Ausbringleitung (15) mit einem der Auslässe (23) fluidisch verbunden ist; oder
b) zumindest einige der Ausbringleitungen (16), vorzugsweise alle Ausbringleitungen (16), jeweils zumindest eine Verzweigungsstelle (16a) aufweisen, die eine Mehrzahl von Leitungszweigen (16b, 16c) bereitstellt, wobei jeweils ein Leitungszweig (16b, 16c) die Verzweigungsstelle (16a) mit einem Ausbringelement (13) verbindet, wobei optional die Verzweigungsstelle (16a) nach Art einer Y-Verzweigung oder nach Art einer T-Verzweigung ausgebildet ist.

14. Spritzvorrichtung (10) nach Anspruch 12 oder 13, wobei die Ausbringleitungen (15; 16) derart ausgelegt sind, dass die aus einer der Mischkammern (20) austretenden Teilströme (23a) auf ihren getrennten Teilströmungswegen von der jeweiligen Mischkammer (20) zu den jeweiligen Ausbringelementen (16) im Wesentlichen den gleichen Druckabfall und gleichen Zeitverzug, bis die Teilströme (23a) an dem jeweiligen Ausbringelement (16) ankommen, aufweisen.

15. Spritzvorrichtung (10) nach einem der Ansprüche 12 bis 14, wobei diejenigen Ausbringleitungen (15; 16), die an der gleichen Mischkammer (20) angeschlossen sind, jeweils die gleiche Länge aufweisen, oder wobei alle Ausbringleitungen (15; 16) die gleiche Länge aufweisen.

16. Spritzvorrichtung (10) nach einem der Ansprüche 12 bis 15, wobei zumindest ein Teil der Ausbringleitungen (15; 16)
a) als Schlauchleitungen und/oder als flexible Leitungen ausgeführt sind; und/oder
b) einen nicht-geraden Verlauf, vorzugsweise gekrümmten, Verlauf aufweisen, und/oder
c) mindestens einen Abschnitt aufweist, der in Längsrichtung des Auslegers entlang eines der Ausleger geführt ist und mindestens einen Abschnitt aufweist, der in Vertikalrichtung entlang eines der Ausleger geführt ist.

17. Spritzvorrichtung (10) nach einem der vorherigen Ansprüche, wobei die Ausbringelemente (13) Spritzdüsen oder Spritzdüsen aufweisende Düsenstöcke sind.

18. Spritzvorrichtung (10) nach einem der vorherigen Ansprüche, wobei das Spritzgestänge um eine in Fahrtrichtung verlaufende Schwenkachse (A) bewegbar an einem Trägerfahrzeug (2) mittelbar oder unmittelbar angeordnet ist, und/oder wobei die zwei seitlichen Ausleger jeweils über eine vertikale Schwenkachse drehbar mit einem Mittelteil (11a) des Spritzgestänges (11) verbunden sind, und wobei jeder Ausleger (12) zueinander verschwenkbare Segmente aufweist, die um aufrechte Achsen zueinander verschwenkbar sind und die in einer senkrecht zur Fahrtrichtung der landwirtschaftlichen Verteilmaschine angeordneten Ebene relativ zueinander verschwenkbar sind.

19. Landwirtschaftliche Feldspritze (1), umfassend eine Spritzvorrichtung (10) nach einem der vorherigen Ansprüche, wobei die Feldspritze beispielsweise eine selbstfahrende (1) oder eine mittels eines Zugfahrzeugs gezogene oder eine an ein Zugfahrzeug angebaute Feldspritze ist.

## Claims

1. Spraying device (10) for an agricultural field sprayer for the metered dispensing of spray liquid, preferably on agricultural land, comprising:
(a) a pivotable spray boom (11) comprising two lateral boom arms (12), each having a plurality of dispensing elements (13) for spraying and/or finely distributing the spray liquid; and
b) at least one mixing chamber (20) for mixing a plurality of spray liquids, comprising
- a first inlet (21) for introducing a first liquid stream,
- a second inlet (22) for introducing a second liquid stream, and
- a plurality of outlets (23) for discharging the mixed liquid stream as a plurality of partial streams (23a),
wherein the first inlet (21) is arranged on a first side of the mixing chamber (20) and the second inlet (22) is arranged on a second side of the mixing chamber (20) opposite the first side, **characterized in that** the second side comprises a projection (27) extending into an interior of the mixing chamber (20), the projection having a plurality of through openings (27a), wherein the second liquid stream enters the interior of the mixing chamber (20) via the plurality of through openings (27a).

2. Spraying apparatus (10) according to claim 1, wherein the first inlet (21) and the second inlet (22) are configured and/or arranged such that a flow path of the first liquid stream and a flow path of the second liquid stream cross within the mixing chamber (20), preferably cross substantially orthogonally.

3. Spraying apparatus (10) according to claim 1 or 2, wherein the first inlet (21) is centrally arranged on the first side of the mixing chamber (20) and/or the second inlet (22) is arranged in a central region (26c) of the second side of the mixing chamber (20).

4. Spraying apparatus (10) according to any one of the preceding claims, wherein the projection (27) is formed as a dome-shaped or hood-like projection.

5. Spraying apparatus (10) according to any one of the preceding claims,
a) wherein the through openings are arranged on the projection such that the second liquid stream flows into the interior of the mixing chamber in the form of a plurality of partial streams distributed in a fan-shaped, disk-like, funnel-shaped manner or similarly to the steps of a spiral staircase; and/or
b) wherein the through openings (27a) are arranged in the circumferential direction on a lateral surface of the projection (27) in such a way that an inflow direction of the second liquid stream entering the interior of the mixing chamber from the through openings is perpendicular to an inflow direction at the first inlet (21).

6. Spraying apparatus (10) according to any one of the preceding claims, wherein the first inlet (21) is arranged centrally above the projection (27) such that a liquid stream entering via the first inlet (21) impinges at least partially on a closed domed central region (27b) of the projection (27) and is deflected therefrom, preferably uniformly distributed in the circumferential direction.

7. Spraying apparatus (10) according to any one of the preceding claims, wherein the projection (27) is arranged in a central region of the second side and the plurality of outlets (23) are arranged in an outer region (26d) of the second side surrounding the central region (26c).

8. Spraying apparatus (10) according to any one of the preceding claims, wherein the plurality of outlets (23) are arranged on the second side in a circular manner and/or concentrically with respect to the projection (27).

9. Spraying apparatus (10) according to any one of the preceding claims, wherein the mixing chamber (20) is cylindrical, comprising a planar circular or annular base plate (26) having the outlets (23) and the second inlet (22), and a cylindrical cover hood (25) having the first inlet (21).

10. Spraying apparatus (10) according to any one of the preceding claims, wherein the mixing chamber comprises a turbulator or a stirring shaft for generating turbulence.

11. Spraying apparatus (10) according to any one of the preceding claims, wherein the mixing chamber is a mixing chamber of a direct injection system of the spraying apparatus.

12. Spraying apparatus (10) according to any one of the preceding claims, comprising a plurality of the mixing chambers (20), wherein
a) the spray boom (11), and preferably each of the boom arms (12), is divided into a plurality of sections, a plurality of application elements (13) for spraying and/or fine distribution of the spray liquid being arranged at each section (19), and each application element (13) being assigned to exactly one section; and
b) each section is assigned to one of the mixing chambers (20), the mixing chamber being arranged upstream of the application elements (13) assigned to the respective section and preferably arranged on the section; and
c) the application elements (13) arranged downstream of the respective mixing chamber (20) are each connected, via an application line (15; 16), to one of the outlets (23) of the respective mixing chamber (20).

13. Spraying apparatus (10) according to claim 12, wherein
a) each application element (13) is fluidically connected to one of the outlets (23) via a separate application line (15); or
b) at least some of the application lines (16), preferably all application lines (16), each have at least one branch point (16a) providing a plurality of branch lines (16b, 16c), wherein in each case one branch line (16b, 16c) connects the branch point (16a) to one application element (13), optionally the branch point (16a) being formed as a Y-branch or as a T-branch.

14. Spraying apparatus (10) according to claim 12 or 13, wherein the application lines (15; 16) are configured such that the partial streams (23a) exiting from one of the mixing chambers (20) exhibit, along their separate partial-flow paths from the respective mixing chamber (20) to the respective application elements (13), substantially the same pressure drop and the same time delay until the partial streams (23a) arrive at the respective application element (13).

15. Spraying apparatus (10) according to any one of claims 12 to 14, wherein those application lines (15; 16) that are connected to the same mixing chamber (20) each have the same length, or wherein all application lines (15; 16) have the same length.

16. Spraying apparatus (10) according to any one of claims 12 to 15, wherein at least a portion of the application lines (15; 16)
a) are formed as hose lines and/or as flexible lines; and/or
b) have a non-straight course, preferably a curved course; and/or
c) have at least one section that is routed, in the longitudinal direction of a boom arm, along one of the boom arms and at least one section that is routed, in a vertical direction, along one of the boom arms.

17. Spraying apparatus (10) according to any one of the preceding claims, wherein the application elements (13) are spray nozzles or nozzle bodies bearing spray nozzles.

18. Spraying apparatus (10) according to any one of the preceding claims, wherein the spray boom (11) is arranged, directly or indirectly, on a carrier vehicle (2) so as to be movable about a pivot axis (A) extending in the direction of travel, and/or wherein the two lateral boom arms (12) are rotatable about a vertical pivot axis relative to a central portion (11a) of the spray boom (11), and wherein each boom arm (12) comprises segments that are pivotable relative to one another about upright axes and that are pivotable relative to one another in a plane arranged perpendicular to the direction of travel of the agricultural distribution machine.

19. Agricultural field sprayer (1), comprising a spraying apparatus (10) according to any one of the preceding claims, the field sprayer being, for example, a self-propelled field sprayer or a field sprayer towed by a towing vehicle or mounted on a towing vehicle.

## Revendications

1. Dispositif de pulvérisation (10) pour un pulvérisateur agricole destiné à la distribution dosée de liquide de pulvérisation, de préférence sur des surfaces utiles agricoles, comprenant :
a) une rampe de pulvérisation (11) pouvant pivoter, comprenant deux flèches (12) latérales, qui comportent chacune une multitude d'éléments de distribution (13) destinés à pulvériser et/ou à disperser avec précision le liquide de pulvérisation, et
b) au moins une chambre de mélange (20) destinée à mélanger plusieurs liquides de pulvérisation, comprenant
- une première entrée (21) destinée à laisser entrer un premier flux de liquide,
- une deuxième entrée (22) destinée à laisser entrer un deuxième flux de liquide, et
- plusieurs sorties (23) destinées à faire sortir le flux de liquide mélangé en tant que plusieurs flux partiels (23a),
la première entrée (21) étant disposée sur un premier côté de la chambre de mélange (20) et la deuxième entrée (22) étant disposée sur un deuxième côté de la chambre de mélange (20) opposé au premier côté, **caractérisé en ce que** le deuxième côté comporte une partie surélevée (27) s'étendant dans un espace intérieur de la chambre de mélange, qui comporte plusieurs ouvertures de passage (27a), le deuxième flux de liquide entrant dans l'espace intérieur de la chambre de mélange (20) par les plusieurs ouvertures de passage (27a).

2. Dispositif de pulvérisation (10) selon la revendication 1, la première entrée (21) et la deuxième entrée (22) étant réalisées et disposées de telle sorte que le trajet d'écoulement du premier flux de liquide et le trajet d'écoulement du deuxième flux de liquide se croisent, de préférence se croisent sensiblement perpendiculairement, dans la chambre de mélange (20).

3. Dispositif de pulvérisation (10) selon la revendication 1 ou 2, la première entrée (21) étant disposée au centre sur le premier côté de la chambre de mélange (20) et/ou la deuxième entrée (22) étant disposée dans une zone centrale (26c) du deuxième côté de la chambre de mélange (20).

4. Dispositif de pulvérisation (10) selon l'une des revendications précédentes, la partie surélevée (27) étant formée comme une partie surélevée bombée à la manière d'un dôme ou de type capot.

5. Dispositif de pulvérisation (10) selon l'une des revendications précédentes,
a) les ouvertures de passage étant disposées de telle manière sur la partie surélevée que le deuxième flux de liquide afflue dans l'espace intérieur de la chambre de mélange sous la forme de plusieurs flux partiels à la manière d'un éventail, à la manière d'un disque circulaire, à la manière d'un entonnoir ou avec une répartition de manière similaire aux marches d'un escalier en colimaçon ; et/ou
b) les ouvertures de passage (27a) étant disposées sur une surface enveloppante latérale de la partie surélevée (27) avec une répartition dans la direction périphérique de telle manière qu'une direction d'écoulement d'entrée du deuxième flux de liquide entrant dans l'espace intérieur de la chambre de mélange depuis les ouvertures de passage est perpendiculaire à une direction d'écoulement d'entrée sur la première entrée (21).

6. Dispositif de pulvérisation (10) selon l'une des revendications précédentes, la première entrée (21) étant disposée au centre au-dessus de la partie surélevée (27) de telle manière qu'un flux de liquide entrant par la première entrée (21) rencontre au moins en partie une zone centrale (27b) bombée fermée de la partie surélevée (27) et, de là, est dévié, de préférence est dévié avec une répartition uniforme dans la direction périphérique.

7. Dispositif de pulvérisation (10) selon l'une des revendications précédentes, la partie surélevée (27) étant disposée sur une zone centrale du deuxième côté et les plusieurs sorties (23) étant disposées sur une zone extérieure (26d) du deuxième côté entourant la zone centrale (26c) .

8. Dispositif de pulvérisation (10) selon l'une des revendications précédentes, les plusieurs sorties (23) étant disposées en forme de cercle sur le deuxième côté et/ou de manière concentrique par rapport à la partie surélevée (27).

9. Dispositif de pulvérisation (10) selon l'une des revendications précédentes, la chambre de mélange (20) étant réalisée avec une forme de cylindre, comprenant une plaque de base (26) de forme circulaire ou plane de forme circulaire, comportant les sorties (23) et la deuxième entrée (22), et un capot de recouvrement (25) en forme de cylindre, comportant la première entrée (21).

10. Dispositif de pulvérisation (10) selon l'une des revendications précédentes, la chambre de mélange comprenant un turbulateur ou un arbre agitateur destiné à produire des turbulences.

11. Dispositif de pulvérisation (10) selon l'une des revendications précédentes, la chambre de mélange étant une chambre de mélange d'un système d'injection direct du dispositif de pulvérisation.

12. Dispositif de pulvérisation (10) selon l'une des revendications précédentes, comprenant plusieurs des chambres de mélange (20),
a) la rampe de pulvérisation (11), et de préférence chacune des flèches (12), étant divisée en plusieurs sections partielles, une multitude des éléments de distribution (13) de pulvérisation et/ou de dispersion avec précision du liquide de pulvérisation étant disposée sur chaque section partielle (19), et chaque élément de distribution (13) étant associé à exactement une section partielle ; et
b) respectivement une des chambres de mélange (20) étant associée à chaque section partielle, laquelle est disposée en amont par rapport aux éléments de distribution (13) associés à chaque section partielle et de préférence sur la section partielle ; et
c) les éléments de distribution (13) disposés en aval de la chambre de mélange (20) respective étant chacun reliés à une des sorties (23) de la chambre de mélange (20) respective par une conduite de distribution (15 ; 16).

13. Dispositif de pulvérisation (10) selon la revendication 12,
a) chacun des éléments de distribution (13) étant relié fluidiquement à une des sorties (23) par une conduite de distribution (15) séparée ; ou
b) au moins certaines des conduites de distribution (16), de préférence toutes les conduites de distribution (16), comportant chacune au moins un point d'embranchement (16a) qui fournit une multitude de branches d'acheminement (16b, 16c), une branche d'acheminement (16b, 16c) reliant respectivement le point d'embranchement (16a) à un élément de distribution (13), le point d'embranchement (16a) étant réalisé en option à la manière d'un embranchement en Y ou à la manière d'un embranchement en T.

14. Dispositif de pulvérisation (10) selon la revendication 12 ou 13, les conduites de distribution (15 ; 16) étant conçues de telle manière que les flux partiels (23a) sortant d'une des chambres de mélange (20) présentent sur leurs trajets d'écoulement partiels séparés depuis la chambre de mélange (20) respective aux éléments de distribution (16) respectifs sensiblement la même chute de pression et le même retard temporel jusqu'à ce que les flux partiels (23a) arrivent sur l'élément de distribution (16) respectif.

15. Dispositif de pulvérisation (10) selon l'une des revendications 12 à 14, les conduites de distribution (15 ; 16), qui sont raccordées à la même chambre de mélange (20), présentant chacune la même longueur, ou toutes les conduites de distribution (15 ; 16) présentant la même longueur.

16. Dispositif de pulvérisation (10) selon l'une des revendications 12 à 15, au moins une partie des conduites de distribution (15 ; 16)
a) étant réalisées comme des conduites tubulaires flexibles et/ou comme des conduites flexibles ; et/ou
b) présentant un tracé non rectiligne, de préférence un tracé incurvé, et/ou
c) comportant au moins une section qui est guidée dans la direction longitudinale de la flèche le long d'une des flèches et comportant au moins une section qui est guidée dans la direction verticale le long d'une des flèches.

17. Dispositif de pulvérisation (10) selon l'une des revendications précédentes, les éléments de distribution (13) étant des buses de pulvérisation ou des porte-buses comportant des buses de pulvérisation.

18. Dispositif de pulvérisation (10) selon l'une des revendications précédentes, la rampe de pulvérisation étant disposée directement ou indirectement sur un véhicule de support (2) de manière mobile autour d'un axe de pivotement (A) s'étendant dans le sens de la marche, et/ou les deux flèches latérales étant reliées chacune à une partie centrale (11a) de la rampe de pulvérisation (11) de manière à pouvoir tourner sur un axe de pivotement vertical, et chaque flèche (12) comportant des segments pivotants les uns par rapport aux autres, qui peuvent pivoter les uns par rapport aux autres autour d'axes verticaux et qui peuvent pivoter les uns par rapport aux autres dans un plan disposé perpendiculairement au sens de la marche de la machine agricole d'épandage.

19. Pulvérisateur agricole (1), comprenant un dispositif de pulvérisation (10) selon l'une des revendications précédentes, le pulvérisateur étant par exemple un pulvérisateur automoteur (1) ou un pulvérisateur tracté au moyen d'un véhicule tracteur ou monté sur un véhicule tracteur.
